# EUROPEAN PATENT SPECIFICATION

(11) **EP 4 233 447 B1**
(45) Date of publication and mention of the grant of the patent: **06.08.2025**
(21) Application number: 20797450.2
(22) Date of filing: 23.10.2020
(51) Int. Cl.: H04W 72/02

(54) **RESOURCE SELECTION-TYPE DEPENDENT PRIORITIZATION OF RESOURCE POOL UTILIZATION**
RESSOURCEN-AUSWAHL-TYP ABHÄNGIGE PRIORISIERUNG DER RESSOURCEN-POOL-NUTZUNG
PRIORISATION EN FONCTION DE LA SÉLECTION DES RESSOURCES EN FONCTION DU TYPE DE RESSOURCES

(43) Date of publication of application: 30.08.2023
(73) Proprietor: Telefonaktiebolaget LM Ericsson (publ), 164 83 Stockholm (SE)
(72) Inventor: LEON CALVO, Jose, Angel, 52064 Aachen (DE); ASHRAF, Shehzad, Ali, 52070 Aachen (DE); BLASCO SERRANO, Ricardo, 02260 Espoo (FI)
(74) Representative: Ericsson
(86) International application number: PCT/EP2020/079923
(87) International publication number: WO 2022/083877

(56) References cited:
- EP-A1- 3 335 495
- WO-A1-2016/022849
- WO-A1-2020/033088
- US-A1- 2016 295 624

## Description

### Technical Field

The present invention relates to methods for controlling device-to-device (D2D) communication and to corresponding devices, systems, and computer programs.

### Background

Current wireless communication networks, e.g., based on the LTE (Long Term Evolution) or NR technology as specified by 3GPP (3^{rd} Generation Partnership Project), also support D2D communication modes to enable direct communication between UEs (user equipments), sometimes also referred to as sidelink (SL) communication. Such D2D communication modes may for example be used for vehicle communications, e.g., including communication between vehicles, between vehicles and roadside communication infrastructure, between vehicles and pedestrians and, possibly, between vehicles and cellular networks. Due to wide range of different types of devices that might be involved in the communication with the vehicles, vehicle-to-everything (V2X) communication is another term used to refer to this class of communication. Vehicle communications have the potential to increase traffic safety, reduce energy consumption and enable new services related to intelligent transportation systems.

Due to the nature of the basic road safety services, LTE V2X functionalities have been designed for broadcast transmissions, i.e., for transmissions where all receivers within a certain range of a transmitter may receive a message from the transmitter, i.e., may be regarded as intended recipients. In fact, the transmitter may not be aware or otherwise be able to control the group of intended receivers. V2X functionalities for the NR technology are for example described in 3GPP TR 38.885 V16.0.0 (2019-03). A similar method is for example disclosed in document EP 3 335 495 A1.

SL communication in the NR technology supports the following transmission modes, which are sometimes referred to as casting modes:
- Broadcast, which is not addressed to any specific UE but to any UE that may be interested. This type of transmission does not involve feedback from receiver to transmitted.
- Unicast, which is addressed to one specific UE. The receiver of the transmission may provide HARQ (Hybrid Automatic Repeat Request) feedback in the form of a positive acknowledgement (ACK) or a negative acknowledgement (NACK), also denoted as HARQ-ACK and HARQ-NACK, respectively.
- Groupcast, which is addressed to a specific group of UEs. For groupcast, two variants can be distinguished. In a first variant a receiver may provide feedback in the form of a HARQ-NACK only. Accordingly, a receiver informs the receiver only about incorrectly decoded transmissions of data. In a second variant, a receiver may provide feedback in the form of a HARQ-ACK or HARQ-NACK.

Accordingly, in the NR technology, also more targeted V2X services can be considered, by also utilizing groupcast, multicast, or unicast transmissions, in which the intended receiver of a message consists of only a subset of the receivers within a certain range of the transmitter (groupcast) or of a single receiver (unicast). For example, in a platooning service for vehicles there may be certain messages that are only of interest for a member vehicle of the platoon, so that the member vehicles of the platoon can be efficiently targeted by a groupcast transmission. In another example, the see-through functionality, where one vehicle provides video data from a front facing camera to a following vehicle, may involve V2X communication of only a pair of vehicles, for which unicast transmissions may be a preferred choice. Furthermore, NR SL communication supports D2D communication of UEs with and without network coverage, with varying degrees of interaction between the UEs and the network, including the possibility of standalone, network-less operation.

Further potential use cases of D2D communication include NSPS (National Security and Public Safety), Network Controlled Interactive Service (NCIS), and railways. In order to provide a wider coverage of NR SL for such use cases, further enhancements of the NR SL technology are being considered. One of such enhancements is power saving which enables UEs with battery constraint to perform SL operations in a power efficient manner. For example, 3GPP work item description "NR Sidelink Enhancement", document RP-193231, TSG RAN Meeting #86 (2019-12), suggests investigation of ways to improvement of performance for power limited UEs, e.g., like pedestrian UEs, UEs associated with first responders, or the like.

For SL communication in the LTE technology and in the NR technology, there are in principle two resource allocation modes: A first resource allocation mode uses network-based resource allocation. In this case the network selects the resources and other transmit parameters to be used for an SL transmission. In some cases, the network may control every single SL transmission parameter. In other cases, the network may select the resources to be used for transmission but may give the transmitting UE some freedom to select transmission parameters, possibly with some restrictions. In the NR technology, this resource allocation mode is denoted as "Mode 1". A second resource allocation mode uses autonomous resource allocation. In this case the UEs autonomously select the resources and other transmit parameters to be used for an SL transmission. In this mode, the resource allocation may be accomplished without assistance by the network, which is for example useful for out-of-coverage UEs, when using unlicensed carriers, or for operation without a network deployment. In some cases, there may be minimal assistance by the network, e.g., by configuration of pools of resources, or the like. In the NR technology, this autonomous resource allocation mode is denoted as "Mode 2".

The Mode 2 resource allocation of the NR technology uses a distributed resource selection mechanism, i.e., there is no central node for scheduling and UEs engaged in SL communication have equal responsibilities in the autonomous resource selection process. Here, the Mode 2 resource allocation is based on two functionalities: reservation of future resources and sensing-based resource allocation. Reservation of future resources is accomplished by the UE sending an SL transmission also notifying receivers of the SL transmission about its intention to transmit using certain time-frequency resources at a later point in time. For example, a UE transmitting at time T may inform the receivers that it will transmit using the same frequency resources at time T+100 ms. This resource reservation allows UEs to utilize the reservations to predict the utilization of the radio resources in the future. Accordingly, by listening to the current transmissions of another UE, a UE also obtains information about potential future transmissions intended by the other UE. This information can be used by the UE to avoid collisions when selecting its own resources. More specifically, a UE may predict the future utilization of the radio resources by reading received booking messages and may then schedule its current transmission to avoid selecting the same resources. This is also known as sensing-based resource selection. Additionally, shortly before transmitting in a reserved resource, the UE can re-evaluate the set of reserved resources to take into account the latest status of resource usage, e.g., if some of the resources might have been occupied by an aperiodic transmission after the resource reservation. If the reserved resources would not be part of the set for selection at this time, then new resources may be selected from an updated resource selection window. In addition to the re-evaluation, pre-emption may be used. In the case of pre-emption a UE may select new resources even after it announced the resource reservation when it observes resource collision with a higher priority transmission from another UE. Details on the sensing-based resource selection can for example be found in 3GPP TS 38.214 V16.2.0 (2020-07).

The sensing-based resource selection can be summarized to include the following steps:
a) A UE senses the transmission medium during an interval [n-a, n-b], where n is a time reference, and a > b ≥ 0 define the duration of the sensing window. The length of the sensing window is (pre-)configurable.
b) Based on the sensing results, the UE predicts the future utilization of the transmission medium at a future time interval [n+T1, n+T2], where T2 > T1 ≥ 0. The interval [n+T1, n+T2] is the resource selection window.
c) The UE selects one or more time-frequency resources among the resources in the selection window [n+T1, n+T2] that are predicted to be selectable (e.g., idle, usable, available, etc.).

For sidelink communication in the LTE technology, two procedures for autonomous resource selection in a transmission mode denoted as "Mode 4" were introduced, which aim at enabling reduced power consumption: partial sensing and random selection for pedestrian UEs. In case of partial sensing, the UE (e.g. a pedestrian UE) uses a reduced selection/sensing window which is a subset of the selection/sensing window used when performing normal sensing. In this way, partial sensing allows for reducing power consumption at the expense of a moderate increase in resource collision probability. In the case of random selection, the UE skips sensing altogether. The latter variant may provide significant benefits in terms of power saving. However, these benefits may come at the risk of rather high of collision probability.

When a resource selection is triggered, the UE will thus select resources for its transmissions. Further, the UE may also be allowed to select multiple resources by using resource reservations. In particular, in each transmission, the UE can signal to other UEs a reservation of up to two additional resources in the near future, or in some cases a reservation for periodic transmissions using the same frequency resources in the further future. Typically, when the UE performs resource selection, the first selected resource is for the initial transmission of a packet and the additional reserved resources have the purpose of being used for potential retransmissions of the same packet.

The resource re-evaluation and pre-emption described earlier allows a UE to re-select a selected resource if the UE detects that the selected resource, which can be reserved or not-yet-reserved, is occupied by some other UE with higher priority.

In the currently standardized version of NR SL, only one type of operation for SL UEs is considered, namely full sensing operation, where the UEs are always sensing and receiving. Accordingly, the UEs should sense the resources at any time, which may result in excessive power consumption. To address this, the above-mentioned 3GPP work item description "NR Sidelink Enhancement", document RP-193231, includes proposals for power saving. Such proposals include defining UEs which are sensing during a limited amount of time, i.e., partial sensing UEs, or UEs that do not have any sensing capability, i.e., UEs using random resource selection. Adopting such proposals may result in scenarios in which such UEs applying different types of resource selection mechanisms coexist with the full sensing UEs in the same resource pool. This may result in increased collision probabilities and thus degraded system performance.

Accordingly, there is a need for techniques which allow for efficiently addressing scenarios where wireless communication devices applying different types of resource selection mechanisms for D2D transmission coexist in the same resource pool.

### Summary

According to an embodiment, a method of controlling D2D communication in a wireless communication network is provided. According to the method, a wireless communication device configures a resource pool for selection of radio resources for D2D transmissions by the wireless communication device, the resource pool being divided into multiple subsets of radio resources which are each associated with at least one of multiple types of selection mechanisms. Depending on which of the multiple types of selection mechanisms is applied by the wireless communication device for selection of radio resources for D2D transmissions, the wireless communication device performs prioritization of the subsets of radio resources. Based on the prioritization of the subsets and using the applied type of selection mechanism, the wireless communication device selects at least one radio resource from the resource pool. Further, the wireless communication device performs one or more D2D transmissions on the selected at least one radio resource.

According to a further embodiment, a method of controlling D2D communication in a wireless communication network is provided. According to the method, a node of the wireless communication network configures a resource pool for selection of radio resources for D2D transmissions by wireless communication devices. The resource pool is divided into multiple subsets of radio resources which are each associated with at least one of multiple types of selection mechanisms. Further, the node configures at least one of the wireless communication devices to, depending on which of the multiple types of selection mechanisms is applied by the respective wireless communication device for selection of radio resources for D2D transmissions, perform prioritization of the subsets of radio resources and select at least one radio resource from the resource pool based on the prioritization of the subsets.

According to a further embodiment, a wireless communication device is provided. The wireless communication device is adapted to configure a resource pool for selection of radio resources for D2D transmissions by the wireless communication device, the resource pool being divided into multiple subsets of radio resources which are each associated with at least one of multiple types of selection mechanisms. Further, the wireless communication device is adapted to, depending on which of the multiple types of selection mechanisms is applied by the wireless communication device for selection of radio resources for D2D transmissions, perform prioritization of the subsets of radio resources. Further, the wireless communication device is adapted to, based on the prioritization of the subsets and using the applied type of selection mechanism, select at least one radio resource from the resource pool. Further, the wireless communication device is adapted to perform one or more D2D transmissions on the selected at least one radio resource.

According to a further embodiment, a wireless communication device is provided. The wireless communication device comprises at least one processor and a memory. The memory contains instructions executable by said at least one processor, whereby the wireless communication device is operative to configure a resource pool for selection of radio resources for D2D transmissions by the wireless communication device, the resource pool being divided into multiple subsets of radio resources which are each associated with at least one of multiple types of selection mechanisms. Further, the wireless communication device is adapted to, depending on which of the multiple types of selection mechanisms is applied by the wireless communication device for selection of radio resources for D2D transmissions, perform prioritization of the subsets of radio resources. Further, the wireless communication device is adapted to, based on the prioritization of the subsets and using the applied type of selection mechanism, select at least one radio resource from the resource pool. Further, the wireless communication device is adapted to perform one or more D2D transmissions on the selected at least one radio resource.

According to a further embodiment, a node for a wireless communication network is provided. The node is adapted to configure a resource pool for selection of radio resources for D2D transmissions by wireless communication devices. The resource pool is divided into multiple subsets of radio resources which are each associated with at least one of multiple types of selection mechanisms. Further, the node is adapted to configure at least one of the wireless communication devices to, depending on which of the multiple types of selection mechanisms is applied by the respective wireless communication device for selection of radio resources for D2D transmissions, perform prioritization of the subsets of radio resources and select at least one radio resource from the resource pool based on the prioritization of the subsets.

According to a further embodiment, a node for a wireless communication network is provided. The node comprises at least one processor and a memory. The memory contains instructions executable by said at least one processor, whereby the node is operative to configure a resource pool for selection of radio resources for D2D transmissions by wireless communication devices. The resource pool is divided into multiple subsets of radio resources which are each associated with at least one of multiple types of selection mechanisms. Further, the node is adapted to configure at least one of the wireless communication devices to, depending on which of the multiple types of selection mechanisms is applied by the respective wireless communication device for selection of radio resources for D2D transmissions, perform prioritization of the subsets of radio resources and select at least one radio resource from the resource pool based on the prioritization of the subsets.

According to a further embodiment of the invention, a computer program or computer program product is provided, e.g., in the form of a non-transitory storage medium, which comprises program code to be executed by at least one processor of a wireless communication device. Execution of the program code causes the wireless communication device to configure a resource pool for selection of radio resources for D2D transmissions by the wireless communication device, the resource pool being divided into multiple subsets of radio resources which are each associated with at least one of multiple types of selection mechanisms. Further, execution of the program code causes the wireless communication device to, depending on which of the multiple types of selection mechanisms is applied by the wireless communication device for selection of radio resources for D2D transmissions, perform prioritization of the subsets of radio resources. Further, execution of the program code causes the wireless communication device to, based on the prioritization of the subsets and using the applied type of selection mechanism, select at least one radio resource from the resource pool. Further, execution of the program code causes the wireless communication device to perform one or more D2D transmissions on the selected at least one radio resource.

According to a further embodiment of the invention, a computer program or computer program product is provided, e.g., in the form of a non-transitory storage medium, which comprises program code to be executed by at least one processor of a node for a wireless communication network. Execution of the program code causes the node to configure a resource pool for selection of radio resources for D2D transmissions by wireless communication devices. The resource pool is divided into multiple subsets of radio resources which are each associated with at least one of multiple types of selection mechanisms. Further, execution of the program code causes the node to, depending on which of the multiple types of selection mechanisms is applied by the respective wireless communication device for selection of radio resources for D2D transmissions, perform prioritization of the subsets of radio resources and select at least one radio resource from the resource pool based on the prioritization of the subsets.

Details of such embodiments and further embodiments will be apparent from the following detailed description of embodiments.

### Brief Description of the Drawings

Fig.1 schematically illustrates an exemplary V2X scenario in which D2D communication may be controlled according to an embodiment of the invention.
Fig. 2 schematically illustrates an exemplary scenario according to an embodiment of the invention, in which D2D communication may be controlled according to an embodiment.
Fig. 3 schematically illustrates an exemplary NSPS communication scenario in which D2D communication may control establishment of a direct wireless link according to an embodiment.
Fig. 4 schematically illustrates division of a resource pool into subsets according to an embodiment.
Fig. 5A schematically illustrates an example of configuring a resource pool according to an embodiment.
Fig. 5B schematically illustrates a further example of configuring a resource pool according to an embodiment.
Fig. 6 shows a flowchart for schematically illustrating a method according to an embodiment.
Fig. 7 shows an exemplary block diagram for illustrating functionalities of a wireless communication device implementing functionalities corresponding to the method of Fig. 6.
Fig. 8 shows a flowchart for schematically illustrating a further method according to an embodiment.
Fig. 9 shows an exemplary block diagram for illustrating functionalities of a network node implementing functionalities corresponding to the method of Fig. 8.
Fig. 10 schematically illustrates structures of a wireless communication device according to an embodiment of the invention.
Fig. 11 schematically illustrates structures of a network node according to an embodiment of the invention.

### Detailed Description of Embodiments

In the following, concepts in accordance with exemplary embodiments of the invention will be explained in more detail and with reference to the accompanying drawings. The illustrated embodiments relate to controlling of D2D communication by wireless communication devices. These wireless communication devices may include various types of UEs or other wireless devices (WDs). As used herein, the term "wireless device" (WD) refers to a device capable, configured, arranged, and/or operable to communicate wirelessly with network nodes and/or other WDs. Unless otherwise noted, the term WD may be used interchangeably herein with UE. Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a Voice over IP (VoIP) phone, a wireless local loop phone, a desktop computer, a Personal Digital Assistant (PDA), a wireless camera, a gaming console or device, a music storage device, a playback appliance, a wearable terminal device, a wireless endpoint, a mobile station, a tablet, a laptop, Laptop Embedded Equipment (LEE), Laptop Mounted Equipment (LME), a smart device, a wireless Customer Premise Equipment (CPE), a vehicle mounted wireless terminal device, a connected vehicle, etc. In some examples, in an Internet of Things (IoT) scenario, a WD may also represent a machine or other device that performs monitoring and/or measurements, and transmits the results of such monitoring and/or measurements to another WD and/or a network node. The WD may in this case be a Machine-to-Machine (M2M) device, which may in a 3GPP context be referred to as a Machine-Type Communication (MTC) device. As one particular example, the WD may be a UE implementing the 3GPP Narrowband loT (NB-loT) standard. Particular examples of such machines or devices are sensors, metering devices such as power meters, industrial machinery, home or personal appliances (e.g., refrigerators, televisions, etc.), or personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal. The illustrated concepts particularly concern WDs that support D2D communication, for example by implementing a 3GPP standard for sidelink communication, Vehicle-to-Vehicle (V2V), Vehicle-to-Infrastructure (V2I), Vehicle-to-Everything (V2X). The D2D communication may for example be based on the LTE radio technology or the NR radio technology as specified by 3GPP, e.g., on the PC5 interface of the LTE or NR technology. However, it is noted that the illustrated concepts could also be applied to other radio technologies, e.g., a WLAN (Wireless Local Area Network) technology.

In the illustrated concepts, a resource pool for selection of radio resources is divides into multiple subsets. These subsets are each associated with at least one of multiple types of selection mechanism. Based on the particular type of selection mechanism applied by the wireless communication device, the wireless communication device prioritizes among the subsets. Based on the prioritization and using the type of selection mechanism applied by the wireless communication device, the wireless communication device selects at least one radio resource from at least one of the subsets and then performs one or more D2D transmissions on the selected at least one radio resource.

The prioritization may be based on certain rules, e.g., involving a restriction of the selection to a subgroup of one or more of the subsets. In some cases, this subgroup may include only that subset which is associated to the type of selection mechanism applied by the wireless communication device, while in other cases the rules may also allow selection from one or more of the other subsets. Further, the rules may define that the subsets to be used for the selection are selected with different probabilities. For example, it could be defined that the subset associated with the type of selection mechanism applied by the wireless communication device is selected with a first probability, while one or more of the other subsets are selected with a second probability, which is lower than the first probability. As a result, it becomes possible to steer the selection of the radio resources for D2D transmissions to different parts of the resource pool, and to control this steering in a flexible manner depending on the type of selection mechanism applied by the wireless communication device. It thus becomes possible to take into account that the types of selection mechanisms may differ with respect to their ability to avoid collisions. For example, types of selection mechanisms which involve sensing of at least a part of the resource pool may offer a better performance in avoiding collisions than types of selection mechanism without sensing, e.g., types of selection mechanisms based on random selection.

In the following description, further details of the illustrated concepts will be explained by referring to examples in which it is assumed that the D2D communication corresponds to SL communication between UEs using the PC5 interface of the LTE radio technology or the NR radio technology. However, it is noted that the principles underlying these examples could also be applied to other types of wireless communication devices and other wireless communication technologies.

In accordance with the principles outlined above, a set of rules may be defined which are applied to UEs operating in a resource pool for selection of radio resources for SL transmissions, taking into account that different UEs may apply different types of selection mechanisms when selecting radio resources from the resource pool. The types of selection mechanisms may in particular include, selection based on full sensing, selection based on partial sensing, and selection based on random selection. Further, the types of selection mechanisms may also include network controlled selection, where one or more parameters used in the above-mentioned selection mechanisms is dynamically controlled by the UE, where a pre-selection of radio resources is provided from the network side, and/or where the selection performed by the UE is otherwise assisted from the network side. Here, it is noted that full sensing may involve that sensing is continuously performed on all frequency resources of the resource pool, while in the case of partial sensing the sensing is limited to a certain time window. Accordingly, the partial sensing window may be regarded as being a subset of a sensing winding used in full sensing. In some case, the partial sensing could also involve limiting the sensing in the frequency domain, e.g., to one or more frequency windows within the resource pool. In the case of random selection, the UE may perform the selection without any sensing.

The rules prioritize from which subset(s) of the resource pool the UE is allowed to select radio resources for SL transmissions. The rules may for example define a restriction in the frequency domain, which depends on the type of selection mechanism applied by the UE. In addition or as an alternative, the rules may define a restriction in the time domain, which depends on the type of selection mechanism applied by the UE. For example, since UEs which apply a selection mechanism based on partial sensing or random selection can be expected to have a higher risk of colliding selection, the prioritization of subsets can help to reduce the overall risk of collisions, because UEs utilizing a type of selection mechanism with higher inherent collision risk can be steered to prefer selection from certain parts of the resource pool, while UEs utilizing a type of selection mechanism with better collision avoidance performance can be steered to prefer other parts of the resource pool. For example, because UEs utilizing a selection mechanism based on partial sensing or random selection have less or no information about the expected occupation status of radio resources than UEs utilizing a selection mechanism based on full sensing, the overall risk of collisions can be reduced by restricting the selection of UEs utilizing a selection mechanism based on partial sensing or random selection so that the risk collisions with UEs utilizing a mechanism based on full sensing can be reduced. On the other hand, under certain conditions it can be useful to allow UEs utilizing a selection mechanism based on full sensing to also utilize the same parts of the resource pool as the UEs utilizing a selection mechanism based on partial sensing or random selection. Here, the better knowledge of the occupancy status of the radio resources may still allow to avoid an excessive risk of collisions.

In some scenarios, the subsets of the resource pool may be adjusted depending on system conditions, e.g., by changing the sizes of the subsets relative to each other. The adjustment may involve addition or removal of frequency resources. Alternatively or in addition, the adjustment of the subsets may involve addition or removal of time resources. The system conditions may for example include a traffic load generated by UEs utilizing a certain type of selection mechanism. Further, such system conditions may include observed failure rates of transmissions, an overall congestion level of the resource pool, or individual congestion levels of the subsets.

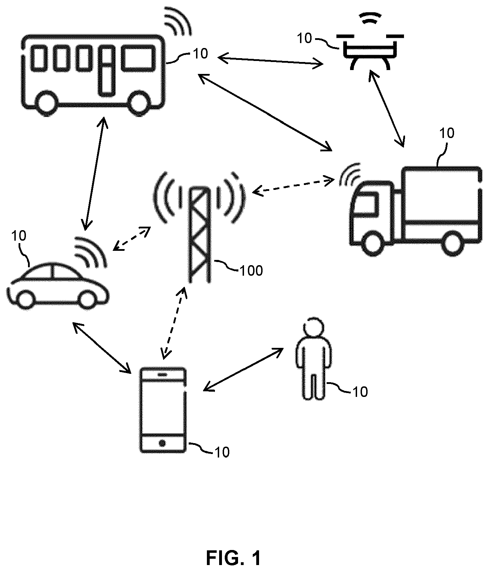

Fig. 1 illustrates an exemplary scenario involving V2X communications. In particular, Fig. 1 shows various UEs 10, which may engage in V2X communication or other D2D communication, illustrated by solid arrows. Further, Fig. 1 shows an access node 100 of a wireless communication network, e.g., an eNB of the LTE technology or a gNB of the NR technology, or an access point of a WLAN. At least some of the UEs 10 may also be capable of communicating by using DL radio transmissions and/or UL radio transmissions, illustrated by broken arrows.

The UEs 10 illustrated in Fig. 1 comprise vehicles, a drone, a mobile phone, and a person, e.g., a pedestrian, a cyclist, a driver of a vehicle, or a passenger of a vehicle. Here, it is noted that in the case of the vehicles the radio transmissions may be performed by a communication module installed in the vehicle, and that in the case of the person the radio transmissions may be performed by a radio device carried or worn by the person, e.g., a wristband device or similar wearable device. Furthermore, it is noted that the UEs shown in Fig. 1 are merely exemplary and that in the illustrated concepts other types of V2X communication device or D2D communication device could be utilized as well, e.g., RSUs (roadside units) or other infrastructure based V2X communication devices, V2X communication devices based in an aircraft, like an airplane, or helicopter, in a spacecraft, in a train or car of a train, in a ship, in a motorcycles, in a bicycle, in a mobility scooter, or in any other kind of mobility or transportation device. The V2X communication may also involve utilizing the illustrated mechanisms for resource selection based on the prioritization of subsets of the resource pool depending on the type of resource selection mechanism applied by the respective UE 10.

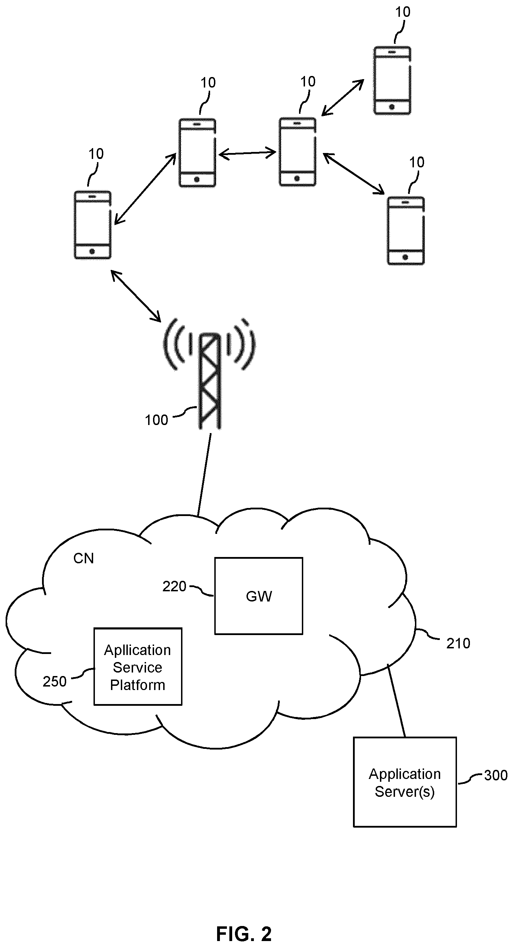

Fig. 2 illustrates an exemplary D2D communication scenario. In particular, Fig. 2 shows multiple UEs 10, which are connected to each other by radio links implementing direct wireless links (illustrated by double-headed arrows). Further, one of the UEs 10 is connected by a radio link to an access node 100 of a wireless communication network, e.g., to an eNB of the LTE technology, or a gNB of the NR technology. The access node 100 is part of a RAN (Radio Access Network) of the wireless communication network, which typically also includes further access nodes to provide a desired coverage of the wireless communication network. Further, Fig. 2 shows a core network (CN) 210 of the wireless communication network. The CN 210 may provide connectivity of the UEs 10 to other data networks, e.g., through a GW 220 provided in the CN 210. Further, the CN 210 may also include various nodes for controlling operation of the UEs 10.

The radio links may be used for D2D communication between the UEs 10. Further, the radio link to the wireless communication network may be used for controlling or otherwise assisting the D2D communication. Further, the D2D communication and/or data communication with the wireless communication network may be used for providing various kinds of services to the UEs 10, e.g., a voice service, a multimedia service, a data service, an intelligent transportation system (ITS) or similar vehicular management or coordination service, an NSPS service, and/or an NCIS service. Such services may be based on applications which are executed on the UE 10 and/or on a device linked to the UE 10. Accordingly, in the illustrated concepts a D2D transmission may convey or correspond to a V2X message, an ITS message, or some other kind of message related to a service. Further, Fig. 2 illustrates an application service platform 250 in the CN 210 of the wireless communication network. Further, Fig. 2 illustrates one or more application servers 300 provided outside the wireless communication network. The application(s) executed on the UE 10 and/or on one or more other devices linked to the UE 10 may use the radio links with one or more other UEs 10, the application service platform 250, and/or the application server(s) 300, thereby enabling the corresponding service(s) on the UE 10. In some scenarios, the services utilized by the UEs 10 may thus be hosted on the network side, e.g., on the application service platform 250 or on the application server(s) 300.

However, some of the services may also network-independent so that they can be utilized without requiring an active data connection to the wireless communication network. This may for example apply to certain V2X or NSPS services. Such services may however still be assisted from the network side while the UE 10 is in coverage of the wireless communication network. Also in the scenario of Fig. 2, the UEs 10 may apply the illustrated mechanisms for resource selection based on the prioritization of subsets of the resource pool depending on the type of resource selection mechanism applied by the respective UE 10.

In the example of Fig. 2, the UEs 10 are assumed to be a mobile phone and vehicles or vehicle-based communication devices, e.g., a vehicle-mounted or vehicle-integrated communication module, or a smartphone or other user device linked to vehicle systems. However, it is noted that other types of UE could be used as well, e.g., a device carried by a pedestrian, or an infrastructure-based device, such as a roadside unit, like for example illustrated in Fig. 1.

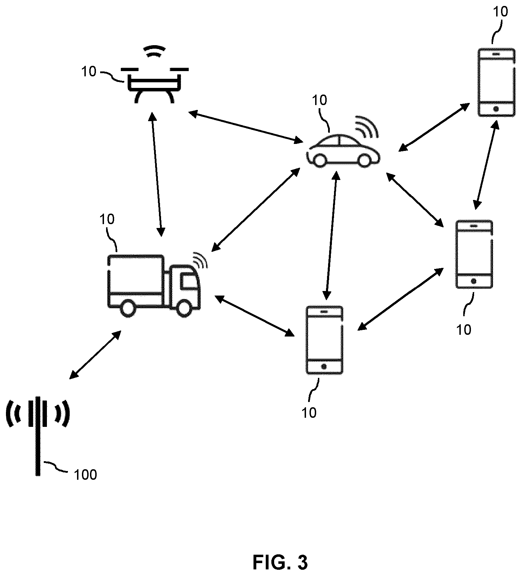

Fig. 3 schematically illustrates an NSPS communication scenario. In particular, Fig. 3 shows multiple UEs 10, which may exchange NSPS messages associated with one or more NSPS services using D2D communication, e.g., based on the LTE sidelink communication or NR sidelink communication. As further illustrated, the NSPS services may be assisted from the network, by exchanging NSPS messages via access node 100. The NSPS services may for example include group communication of rescue vehicles, rescue personnel or other equipment or personnel of public safety related organizations. Such communication may also involve utilizing the illustrated mechanisms for resource selection based on the prioritization of subsets of the resource pool depending on the type of resource selection mechanism applied by the respective UE 10.

As mentioned above, in some scenarios the D2D communication involving the prioritization of subsets of the resource pool may be based on the SL mode of the NR or LTE technology, using the PC5 radio interface. In such cases the SL communication may be based on multiple physical channels defined on a physical (PHY) layer of the radio interface between the TX UE and the RX UE, including a Physical sidelink control channel (PSCCH), a Physical sidelink shared channel (PSSCH), a Physical sidelink feedback channel (PSFCH), and a Physical sidelink broadcast channel (PSBCH). The data decoded from the PHY layer may then be further processed by an MAC (Medium Access Control) entity of the RX UE.

The PSCCH carries only control information, usually referred to as the first-stage SCI (Sidelink Control Information). It is transmitted using a predefined format in predetermined radio resources, allowing a RX UE to use blind decoding. That is, a RX UE attempts to decode PSCCH according to the predefined format in the predetermined radio resources, without knowing beforehand whether a PSCCH was indeed transmitted or not. If the decoding operation succeeds, the RX UE assumes that a PSCCH was transmitted. Otherwise, it assumes no PSCCH was transmitted. The PSCCH carries information that is necessary to decode the PSSCH.

The PSSCH carries both control information and data payload. The control information is usually referred to as the second-stage SCI. It is transmitted using the radio resource allocation and transmission format indicated in PSCCH. It contains further information that is necessary to decode the data payload carried by PSSCH too.

The PSFCH carries only feedback information. The contents of PSFCH depends on the mode of HARQ operation. In some cases, both positive (also denoted as ACK) and negative (also denoted as NACK) acknowledgements are transmitted. In other cases, only NACK is transmitted. PSFCH transmission uses a predefined format and takes place in predetermined radio resources.

The PSBCH carries basic system configuration information, e.g., concerning bandwidth, TDD (time-division duplexing) configuration, or the like. Further, the PSBCH carries synchronization signals.

For the SL communication, a typical operation may be as follows: A first UE performs an SL transmission on the PSCCH and PSSCH. The resources used for the SL transmission are selected by the first UE from a resource pool, e.g., using a certain type of resource selection mechanism, which is typically preconfigured in the first UE. This may be a sensing based resource selection mechanism, either based on full sensing or based on partial sensing. Alternatively, this may be a resource selection mechanism without sensing, e.g., based on random selection. A second UE receives the SL transmission. Receiving the SL transmission may involve that, by means of blind decoding, the second UE detects the PSCCH and decodes the first-stage SCI carried by the PSCCH. If the blind decoding is successful, the second UE uses the decoded contents of the PSCCH to decode second-stage SCI carried by the PSSCH. Having decoded the second-stage SCI, the second UE uses the first-stage SCI and the second-stage SCI to decodes payload data carried by the PSSCH. Here, it is noted that in order to receive and decode the SL transmission, the second UE does not need to be aware of the particular type of selection mechanism applied by the first UE or about the subsets and their prioritization.

Having successfully decoded the payload data, the second UE proceeds to transmit HARQ (Hybrid Automatic Repeat Request) feedback on the PSFCH. Different modes of providing the HARQ feedback may be utilized. The first UE expects to receive the HARQ feedback from the second UE and may use the presence and contents of the PSFCH to determine further actions, e.g., whether to perform a retransmission or not. Accordingly, the PSFCH may be is used to trigger actions related to HARQ operation for the SL transmission. The utilization of the HARQ feedback may also be omitted in some cases. For example, HARQ feedback is typically not utilized for SL transmissions in broadcast mode. The first UE may indicate in the SCI whether or not it expects the the second UE to transmit the PSFCH with HARQ feedback. In some scenarios, the SL transmission from the first UE may also indicate a reservation of resources for future SL transmissions, e.g., to be used for a possible retransmission of the SL transmission or for an expected next SL transmission carrying periodic traffic.

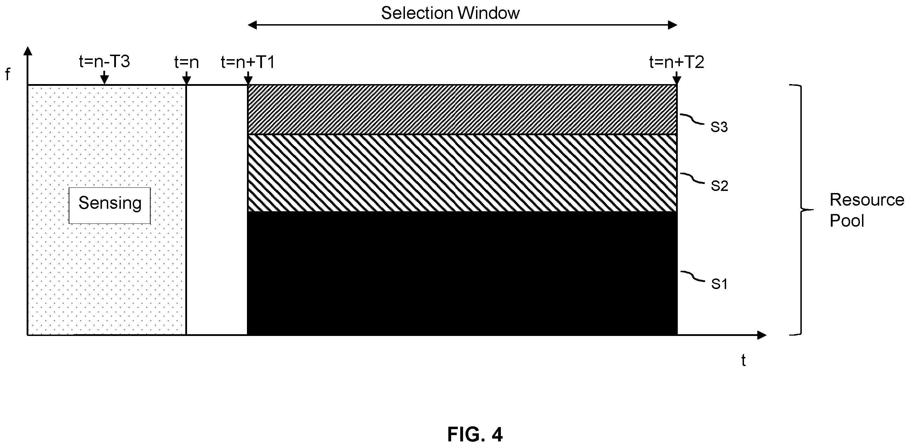

As mentioned above, in the illustrated concepts different subsets of the resource pool may be assigned to different types of selection mechanisms. In the following examples, it is assumed that the resource pool for selection of radio resources for SL transmissions is shared by three types of UEs: 1) UEs which select radio resources for SL transmissions based on full sensing, in the following also denoted as full sensing UEs (FS UEs), 2) UEs which select radio resources for SL transmissions based on partial sensing, in the following also denoted as partial sensing UEs (PS UEs), and 3) UE which select radio resources for SL transmissions based on random selection, without sensing, in the following also denoted as random selection UEs (RS UEs). In view of this situation, the resource pool is divided into three subsets: a first subset primarily assigned to the FS UEs, a second subset primarily assigned to the PS UEs, and a third subset primarily assigned to the RS UEs. An example of a corresponding resource pool configuration is illustrated in Fig. 4, where the first subset is denoted by S1, the second subset is denoted by S2, and the third subset is denoted by S3.

When performing the resource selection for one or more SL transmissions, these subsets are prioritized depending on the type of UE, i.e., depending on whether the selecting UE is an FS UE, a PS UE, or an RS UE. In some cases, the rules for prioritization may require that a certain subset is reserved for the type of UE to which it is primarily assigned. For example, the rules may define that the selection by the RS UEs is restricted to the third subset S3, and that the selection by the PS UEs is restricted to the second subset S2. Similarly, the rules may define that the selection by the FS UEs is restricted to the first subset S3, In some cases, the rules may also allow selection from other subsets. For example, the rules could define that, at least under certain conditions, the FS UEs are allowed to select radio resources from the second subset S2 and/or from the third subset S3. The above-mentioned conditions may for example be based on a priority of the SL transmission to be performed by the FS UE. For example, for an SL transmission of high priority, e.g., associated with a priority value above a threshold, the FS UE could be allowed to perform the selection from all three subsets S1, S2, S3. Further, such conditions additionally or alternatively be based on a congestion level of the first subset S1. For example, if the first subset has a congestion level above a threshold, the FS UEs could be allowed to perform the selection also from the second subset and/or from the third subset. Still further, such conditions could be based on failure to select radio resources from the primarily assigned subset. For example, if for a PS UE selection of resources from the second subset S2 fails, e.g., because the partial sensing indicates that the amount of available radio resources in the second subset is not sufficient, the PS UE could be allowed to perform the selection also from the first subset and/or from the third subset. Similarly, if for an RS UE selection of resources from the third subset S3 fails, e.g., because in an initial selection attempt the selected resources are found to be occupied, the RS UE could be allowed to perform the selection also from the second subset and/or from the third subset. Further, the utilization of other subsets may also be controlled based on probabilities defined by the rules. For example, a pseudo-random decision could be used to that, with a certain probability as defined by the rules, an FS UE is also allowed to select radio resources from the second subset S2 and/or from the third subset S3. It is noted that these conditions and other criteria like probabilities are only some examples and could also combined with each other.

As also illustrated in Fig. 4, at least some of the UEs perform sensing of the resource pool. As illustrated, the sensing may be performed in a continuous manner, up to time t=n. The sensing is used to predict the occupation status of the radio resources in the resource pool in a selection window, starting at time t=n+T1 and ending at time t=n+T2. For the PS UEs, the sensing is performed in a limited sensing window, denoted as partial sensing window. The partial sensing window may be non-contiguous and be limited to start at a certain time t=n-T3. In some scenarios, the partial sensing window could also be limited in the frequency domain.

The selection window is divided into the subsets S1, S2, and S3. Here, it is noted that while the example of Fig. 4 assumes that the subsets S1, S2, S3 each correspond to a contiguous part of the overall bandwidth of the resource pool, i.e., are distinct in the frequency domain, it would also be possible that at least some of the subsets are non-contiguous. Further, the division of the subsets S1, S2, S3 could also be based on forming the subsets to be at least in part distinct in the time domain. In the frequency domain, the subsets S1, S2, S3 may be defined in terms of resource blocks. In the time domain, the subsets S1, S2, S3 may be defined in terms of time slots.

In accordance with the illustrated principles, a resource selection procedure may be implemented as follows:
- A UE is configured with a resource pool for selection of radio resources for SL transmissions. The resource pool can be preconfigured, e.g., based on a standard and/or based on network operator settings. Further, the resource pool could be defined based on signaling from one or more nodes of the wireless communication network, e.g., by broadcast signaling or by RRC (Radio Resource Control) signaling.
- The UE determines the rules for prioritization that apply to the resource pool. The determination of the rules may be based on the above-mentioned signaling for configuration of the resource pool, may be based on separate signaling, on another broadcast message or another RRC message, and/or may be based on preconfiguration, e.g., based on a standard and/or based on network operator settings.
- The UE performs selection of radio resources based on the rules for prioritization.

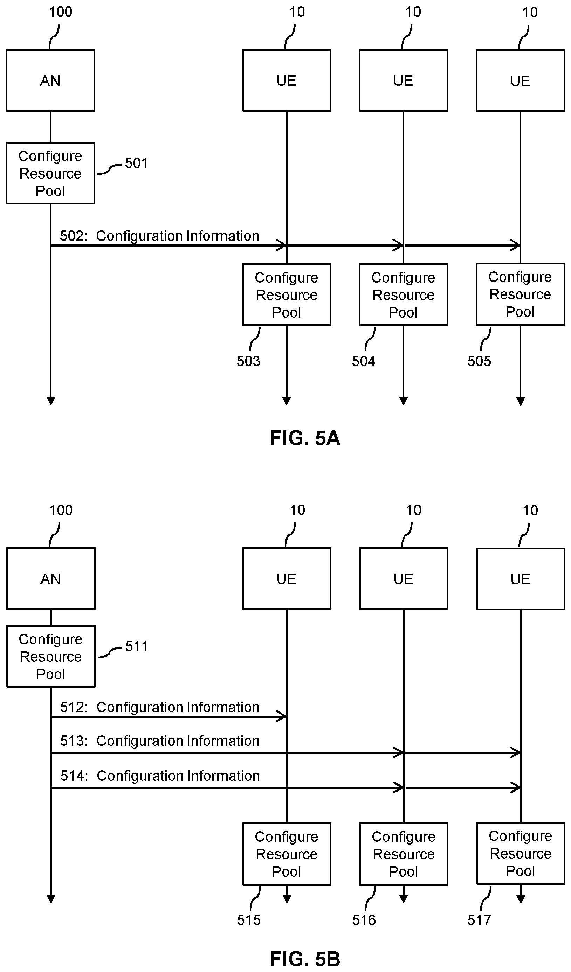

Figs. 5A and 5B illustrated exemplary processes that may be used for configuration of the resource pool and/or of the rules for prioritization. These processes involve an access node (AN) 100 of the wireless communication network, e.g., corresponding to the access node 100 of Fig. 1 or 3, and a number of UEs 10, e.g., corresponding to any of the UEs 10 of Figs. 1, 2, or 3. In the processes of Figs. 5A and 5B, the UEs 10 are assumed to be within range of the access node 100. However, it is noted that after the illustrated processes the UEs 10 could also move out of coverage of the access node 100 and also out of coverage of any other access node of the wireless communication network.

In the example of Fig. 5A, at block 501 the access node 100 configures a resource pool. This may for example involve defining frequency boundaries of the resource pool and/or a set of resource blocks, frequency channels, and/or bandwidth parts which form the resource pool. Further, the configuration of the resource pool may involve dividing the resource pool into subsets, e.g., into the above-mentioned subsets S1, S2, S3, and associating each subset with one or more types of selection mechanisms. Still further, block 501 may also involve defining at least some of the above-mentioned rules for prioritization of the subsets.

The access node 100 then sends a broadcast message 501, which is received by the UEs 10. The broadcast message 501 indicates configuration information related to the resource pool as determined at block 501. For example, the configuration information may indicate the radio resources forming the resource pool, e.g., in terms frequency boundaries of the resource pool and/or a set of resource blocks, frequency channels, and/or bandwidth parts. Further, the configuration information may indicate the subsets into which the resource pool is divided and/or the types of selection mechanisms associated with the subsets. Still further, the configuration information may indicate at least some of the prioritization rules that apply to the resource pool. Based on the received configuration information, each of the UEs 10 locally configures a resource pool for the selection of radio resources for SL transmissions and determines the rules for prioritization that are applicable to the resource pool, as indicated by blocks 503, 504, and 505. Since all UEs receive the same configuration information, each UE 10 can also be aware of the rules applied by other UEs with respect to the utilization of the resource pool.

In the example of Fig. 5B, at block 511 the access node 100 configures a resource pool. This may for example involve defining frequency boundaries of the resource pool and/or a set of resource blocks, frequency channels, and/or bandwidth parts which form the resource pool. Further, the configuration of the resource pool may involve dividing the resource pool into subsets, e.g., into the above-mentioned subsets S1, S2, S3, and associating each subset with one or more types of selection mechanisms. Still further, block 511 may also involve defining at least some of the above-mentioned rules for prioritization of the subsets.

The access node 100 then sends a respective unicast message 512, 513, 514 to each of the UEs 10, and the UEs 10 receive the unicast messages 512, 513, 514. The unicast messages may for example correspond to RRC messages. The unicast messages 512, 513, 514 each indicate configuration information related to the resource pool as determined at block 511. For example, the configuration information may indicate the radio resources forming the resource pool, e.g., in terms frequency boundaries of the resource pool and/or a set of resource blocks, frequency channels, and/or bandwidth parts. Further, the configuration information may indicate the subsets into which the resource pool is divided and/or the types of selection mechanisms associated with the subsets. Still further, the configuration information may indicate at least some of the prioritization rules that apply to the resource pool. Based on the received configuration information, each of the UEs 10 locally configures a resource pool for the selection of radio resources for SL transmissions and determines the rules for prioritization that are applicable to the resource pool, as indicated by blocks 515, 516, and 517. At least a part of the conveyed configuration information may be the same for each of the unicast messages 512, 513, 514. In this way, each UE 10 can also be aware of the rules applied by other UEs with respect to the utilization of the resource pool. However, the configuration information conveyed by the unicast messages 512, 513, 514 could also differ between at least some of the UEs 10. It may thus also be possible to individualize the rules applied by other UEs with respect to the utilization of the resource pool and/or the division of the resource pool into the subsets. This individualization may pertain to individual UEs 10 or to groups of UEs 10.

Accordingly, in the illustrated concepts the resource pool may be divided into subsets which are each primarily assigned to a certain type of UE, e.g., FS UE, PS UE, or RS UE, and the prioritization rules may be used to control how the subsets are used when the UEs select radio resources from the resource pool. As a result, for some types of UEs and/or depending on certain conditions, the selection may be restricted to one or more of the subsets.

In some scenarios, the rules for prioritization may define that one or more of the subsets are more likely to utilized for selection by specific types of UEs. For example, the rules be defined in such a way that an FS UE has a higher probability to select radio resources from subset S1 as compared to subsets S2 or S3, whereas a PS UE has a higher probability to select radio resources from subset S2 as compared to subsets S1 or S3. Similarly, the rules could be defined in such a way that an RS UE has a higher probability to select radio resources from subset S3 as compared to subsets S1 or S2. In each case, the rules may however still allow selection from the entire resource pool. That is to say, the selection probabilities may differ between the subsets, but are non-zero for each of the subsets.

The definitions of the subsets may be included in a message for configuration of the resource pool, such as explained for the above-mentioned messages 502, 512, 513, 514. The resource pool and/or the subsets can also be preconfigured, e.g., based on a standard or based on network operator settings. The latter option may be useful for UEs which are out of network coverage.

In the frequency domain, the subsets may be defined in terms of resource blocks or groups of resource blocks included in the subset. The included resource blocks may be contiguous or non-contiguous. In addition or alternatively, the definition of the subsets in the frequency domain could be based on frequency boundaries, frequency channels, or bandwidth parts. In the time domain, the subsets could be defined in terms of time domain boundaries, slots, subframes, or symbols.

In some scenarios, the definition of the subsets could be standardized depending on the types of selection mechanisms. For example, a first subset primarily assigned to a first type of UE, e.g., FS UEs, could be defined to correspond to first percentage X% of the total radio resources in the resource pool, a second subset primarily assigned to a second type of UE, e.g., PS UEs, could be defined to correspond to second percentage Y% of the total radio resources in the resource pool, a third subset primarily assigned to a third type of UE, e.g., RS UEs, could be defined to correspond to third percentage Z% of the total radio resources in the resource pool, etc. These percentages could for example relate to an indexing of the radio resources in terms of resource blocks, groups of resource blocks, resource elements, or groups of resource elements.

In some scenarios, the rules for prioritization may define that for a certain type of UEs, the selection of the radio resources for SL transmissions is restricted to only one of the subsets. For example, the selection by a first type of UE, e.g., RS UEs, could be restricted to one of the subsets, such as the above-mentioned subset S3, and the selection by a second type of UEs, e.g., PS UEs could be restricted to another one of the subsets, such as the as the above-mentioned subset S2. For a third type of UEs, e.g., FS UEs, there could be no such restriction so that the third type of UEs is allowed to select the radio resources from the entire resource pool. Such restrictions could be defined in terms of validity information as part of configuration information for defining the subsets.

In some scenarios, multiple subsets of the resource pool can be associated with a certain type of UE. Such subsets may be non-contiguous or non-adjacent. For example, a first subset and a second subset could be primarily assigned to PS UEs. These two subsets may then be subject to prioritization also based on other criteria than the type of selection mechanism corresponding to this type of UE. For example, a PS UE could prioritize the first subset and the second subset based on channel conditions, individual occupancy levels of the subsets, or individual congestion levels of the subsets.

In some scenarios, the subsets may be adapted depending on certain conditions. Such adaptation may be performed locally at the UE. Alternatively or in addition such adaptation may be controlled or managed from the network side, e.g., by the above-mentioned access node. The adaptation may be performed in the frequency domain, by addition of frequency resources to the subset or removal of frequency resources from the subset. Alternatively or in addition, the adaptation may be performed in the time domain, by addition of time resources to the subset or removal of time resources from the subset. Here, it is noted that when adapting one of the subsets, this may be accompanied by a complementary adaptation of one or more other subsets. For example, the size of one subset may be increased by a certain amount, while reducing the size of another subset by the same amount.

The adaptation of the subset may for example depend on a number of UEs operating on the resource pool and utilizing the same type of selection mechanism, e.g., the number of FS UEs, the number of PS UEs, and/or the number of RS UEs. Such information may for example be collected from messages transmitted from the UEs to the network, e.g., requests for utilization or configuration of the resource pool, e.g., from SL UE information messages transmitted by the UEs. For example, if the number of UEs utilizing the same type of selection mechanism exceeds a first threshold, the size of the subset to which this type of UE is primarily assigned may be increased. Similarly, if the number of UEs utilizing the same type of selection mechanism falls below a second threshold, the size of the subset to which this type of UE is primarily assigned may be reduced. In addition or as an alternative, the adaptation of the subset may be based on a congestion level of the subset. For example, if the congestion level exceeds a first threshold, this may trigger increasing the size of the subset, and if the congestion level falls below a second threshold, this may trigger reducing the size of the subset. The congestion level may for example be observed in terms of CBR (Channel Busy Ratio).

In some scenarios, the prioritization may also be controlled by setting one or more thresholds utilized in one or more of the selection mechanisms applied by the UEs. In particular, such threshold could be set differently for at least some of the subsets, thereby achieving that the probability of selection is biased towards cone or more of the subsets. For example, assuming the subsets as illustrated in Fig. 4, the FS UEs could perform the selection based on three thresholds for the sensed RSRP (Reference Signal Received Power), denoted as TH1, TH2, and TH3. If the RSRP measured in a radio resource of the first subset S1 exceeds TH1, the radio resource is assessed as being occupied. If the RSRP measured in a radio resource of to the second subset S2 exceeds TH2, the radio resource is assessed as being occupied. If the RSRP measured in a radio resource of to the third subset S3 exceeds TH3, the radio resource is assessed as being occupied. By setting TH1 > TH2 > TH3, the radio resources of the third subset S3 are more likely to be assessed as being occupied than those of the second subset S2, and the radio resources of the second subset S2 are more likely to be assessed as being occupied than those of the first subset S1. This in turn results in biasing the selection probability towards the first subset S1, although selection from the second subset or third subset is still possible. It is noted that depending on the particular implementation of the selection mechanism, the threshold value could also be defined with respect to other variables, such as indicated priority values or the like. Moreover, if two types of selection mechanisms utilized by the UEs are based on the same parameters, e.g., RSRP for sensing occupancy, the thresholds could also be defined differently for these two types of selection mechanisms. For example, the FS UEs could assess a radio resource as being occupied if the measured RSRP exceeds a full sensing threshold THF, and the PS UEs could assess a radio resource as being occupied if the measured RSRP exceeds a partial sensing threshold THP. By setting THP > THF, the selection probability could be biased towards selection by a FS UE.

In some scenarios, the prioritization may also involve that resources of one or more of the subsets are being considered as being occupied when performing sensing based selection of radio resources. For example, when considering the above-mentioned subsets S1, S2, and S3, the FS UEs could consider radio resources from the subset S2 and/or radio resource from the subset S3 as being occupied when performing the sensing.

In some scenarios, the prioritization may also involve that for the FS UEs selection of resources from the subset S2 primarily assigned to the PS UEs and/or from the subset S3 primarily assigned to the RS UEs occurs with lower probability than from the subset primarily assigned to the FS UEs. This can be achieved by assigning the radio resources of the subset S2 and/or of the subset S3 with a lower selection priority than the resources of the subset S1. Accordingly, the FS UEs would prefer selection of radio resources from the subset S1 over selection of resources from the other subset S2, S3.

In some scenarios, the prioritization may also involve assigning the different types of UEs with different priorities. For example, the RS UEs could be assigned the highest priority for their transmissions. This would enable the RS UEs to pre-empt the resources selected by the other types of UEs, i.e., PS UEs and FS UEs. The assigned priorities may differ between the subsets. For example, in the subset S3, the RS UEs may be assigned the highest priority, in the subset S2, the PS UEs may be assigned the highest priority, and in the subset S1 the FS UEs may be assigned the highest priority. In some scenarios, the UEs could also indicate their respectively applied type of selection mechanism in transmitted control information, e.g., in the SCI. The other UEs may consider this information when performing pre-emption or re-evaluation as specified for NR SL, and prioritize certain radio resources in the pre-emption or re-evaluation.

In some scenarios, the prioritization may involve that a minimum number of radio resources that should be available for selection by the PS UEs in the subset is defined to be higher than for the FS UEs. For example the minimum number of radio resource to be available for the PS UEs could be defined as #resources_available > X * M_total * K, while for the FS UEs the minimum number of radio resources to be available for the PS UEs could be defined as #resources_available > X * M_total, with M_total denoting the total number of radio resources in the resource pool, X being an adjustable parameter, and K being a value larger than one, e.g., K ≥ 2.

In some scenarios, the PS UEs and/or the RS UEs may individually adapt the subset they are primarily assigned to, i.e., the subset S2 and the subset S3 respectively. Accordingly, these subsets may differ from their initial configuration and may also differ between UEs. Here, the adaptation of the subset could be performed only in the time domain, i.e., by addition or removal of time resources. The adaptation could for example be based on network conditions, e.g., the congestion level of the subset, or on a priority of the next SL transmission by the UE. In addition or as an alternative, the adaptation could be based on the successes and/or failures of one or more previous SL transmission by the UE. In addition or as an alternative, for PS UE the adaptation could be based on the size of the partial sensing window, e.g., on its time domain length. Alternatively, the adaptation of the subset could be performed only in the frequency domain, i.e., by addition or removal of frequency resources, or both in the time domain and frequency domain. Also in these cases, the adaptation could be based on network conditions, e.g., the congestion level of the subset, or on a priority of the next SL transmission by the UE, the successes and/or failures of one or more previous SL transmission by the UE, and/or on the size of the partial sensing window. The increase of the size of the subset in the time domain and/or frequency domain may be limited to a maximum values, e.g., defined by received configuration information or preconfigured based on a standard or network operator settings.

In some scenarios, the adaptation of the subset may also be restricted by a minimum number of radio resources that should be available for selection, e.g., defined by #resources_available > X * M_total. If the number of available radio resources is not enough the size of the subset may be increased.

In some scenarios, also the possibility of making reservations of radio resources may be considered. For example, in the NR SL technology a UE performing an SL transmission on certain radio resources form a shared resource pool use this SL transmission to indicate a reservation of radio resources of the pool for one or more future SL transmissions. In principle, it is possible to make a reservation for any radio resources within the resource pool. In the illustrated concepts, the prioritization of one or more subsets may also result in a restriction of possible reservations of radio resources from the resource pool.

When for example considering the organization of the resource pool as explained in connection with Fig. 4, it can for example be assumed that the resource pool occupies the entire system bandwidth which consists of N subchannels in the frequency domain. The first subset S1 could then span the first subchannel, the second subset S2 could span the second subchannel and third subchannel, and the third subset S3 could span the remaining subchannels. Based on this, the FS UEs could be are restricted to signaling reservations of radio resources only within the first subset S1, the PS UEs could be are restricted to signaling reservations of radio resources only within the second subset S2, and the RS UEs could be are restricted to signaling reservations of radio resources only within the third subset S3. That is to say, the reservations may be restricted to the subset to which the UE making the reservation is primarily assigned. However, if the prioritization also allows selection from other subsets, the restriction of the reservation may reflect this in a corresponding manner. For example if the prioritization allows the FS UEs to select radio resources from all subsets S1, S2, S3, the FS UEs may also be allowed to signal a reservation of radio resources for all of these subsets S1, S2, S3. Similarly, if the PS UEs are allowed to select radio resources from the first and second subsets S1, S2, the PS UEs may also be allowed to signal a reservation of radio resources for the first and second subsets S1, S2. Accordingly, the reservation of resources may be restricted to those subsets which are allowed to be used, or which were used, when selecting the radio resources for the SL transmission that indicates the reservation. Here it should also be noted that the type of signaling used for the reservation may be the same irrespective of the type of the UE making the reservation and that it may therefore not be possible to derive from the signaling alone which type of UE made the reservation.

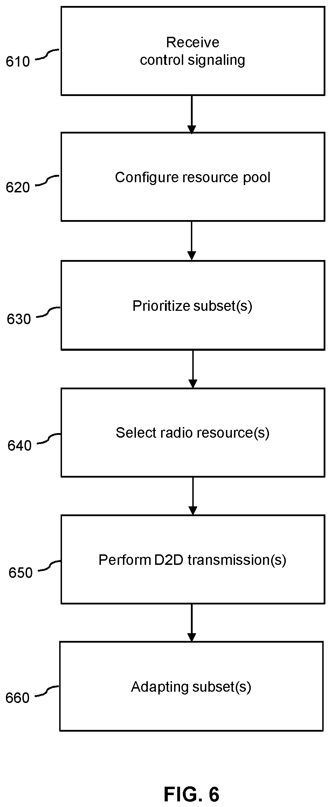

Fig. 6 shows a flowchart for illustrating a method, which may be utilized for implementing the illustrated concepts. The method of Fig. 6 may be used for implementing the illustrated concepts in a wireless communication device, e.g., corresponding to any of the above-mentioned UEs 10. In some scenarios, the wireless communication device may be a vehicle or vehicle-mounted device, but other types of WD, e.g., as mentioned above, could be used as well. The wireless communication device may for example be a UE for public safety operations, a UE that is mounted on a vehicle or is part of a vehicle. Such vehicle may be a car, a motorcycle, a drone, a bike, or the like.

If a processor-based implementation of the wireless communication device is used, at least some of the steps of the method of Fig. 6 may be performed and/or controlled by one or more processors of the wireless communication device. Such wireless communication device may also include a memory storing program code for implementing at least some of the below described functionalities or steps of the method of Fig. 6.

At step 610, the wireless communication device may receive control signaling. The control signaling may for example indicate a configuration of a resource pool. In addition or as an alternative, the control signaling may indicate division of a resource pool of into multiple subsets of radio resources. For example, the control signalling may indicate at least one of the subsets, e.g., in terms of frequency resources and/or time resources included in the subset. Further, the control signaling may indicate a priority of at least one of the subsets, e.g., in terms of a priority value. Further, the control signaling may indicate an association of the subsets of radio resources to types of selection mechanisms to be applied for selection of radio resources for D2D transmissions, e.g., in terms of a mapping.

The control signaling of step 610 may include one or more broadcast messages, e.g., as explained in connection with Fig. 5A. Alternatively or in addition, the control signaling of step 830 may include one or more unicast messages, e.g., as explained in connection with Fig. 5B.

At step 620, the wireless communication device configures a resource pool for selection of radio resources for D2D transmissions by the wireless communication device. The resource pool is divided into multiple subsets of radio resources which are each associated with at least one of multiple types of selection mechanisms.

The types of selection mechanism may include a type of selection mechanism based on random selection of the radio resources. In addition or as an alternative, the types of selection mechanism may include a type of selection mechanism based on sensing of the resource pool to estimate a future occupation status of radio resources in the resource pool. In addition or as an alternative, the types of selection mechanism may include a type of selection mechanism based on partial sensing of the resource pool to estimate a future occupation status of radio resources in the resource pool. In addition or as an alternative, the types of selection mechanism may include a type of selection mechanism based on network controlled selection of the radio resources.

In some scenarios, the wireless communication device may configure the resource pool at least in part based on the control signaling received at step 610. In addition or as an alternative, the resource pool could at least in part be preconfigured, e.g., based on a standard and/or based on network operator settings.

In some scenarios, the wireless device may configure at least one of the subsets based on the control signaling received at step 610. Alternatively or in addition, at least one of the subsets may be preconfigured in the wireless communication device, e.g., based on a standard and/or based on network operator settings. As for example illustrated in Fig. 4, the subsets may be distinct in frequency domain. However, they could also be distinguished in the time domain.

At step 630, the wireless communication device performs prioritization of the subsets. The prioritization depends on which of the multiple types of selection mechanisms is applied by the wireless communication device for selection of radio resources for D2D transmissions. For example, the wireless communication device may prioritize that subset which to which the type of selection mechanism applied by the wireless communication device is associated.

In some scenarios, the wireless communication device may use an association of the subset to one or more of the types of selection mechanisms to determine a priority of at least one of the subsets. For example, this association could be indicated by the control signaling of step 610.

In some scenarios, the prioritization of the subsets performed at step 630 may involve prioritizing selection from the subset associated with the type of selection mechanism applied by the wireless communication device over selection from one or more of the other subsets, e.g., associated with another type of selection mechanism.

In some scenarios, the prioritization of the subsets performed at step 630 may involve allowing selection from one or more of the other subsets if selection from the subset associated with the type of selection mechanism applied by the wireless communication device fails.

In some scenarios, the prioritization of the subsets performed at step 630 may involve performing selection from the subset associated with the type of selection mechanism applied by the wireless communication device with a first probability and performing selection from one or more of the other subsets with a second probability which is lower than the first probability.

In some scenarios, at least one of the types of selection mechanisms is based on comparison of measured signal strengths to at least one threshold. In such cases, the prioritization of step 630 may involve setting different values of the threshold for at least some of the subsets.

In some scenarios, the prioritization of the subsets performed at step 630 may involve restricting the selection of the radio resources to a subgroup of one or more of the subsets.

In some scenarios, the prioritization of the subsets performed at step 630 may be based on occupancy levels of the subsets, e.g., measured in terms of a CBR.

At step 640, the wireless communication device selects at least one radio resource from the resource pool. This is accomplished based on the prioritization of the subsets performed at step 630. When making the selection, the wireless communication device applies a certain type of selection mechanism, which corresponds to that on which the prioritization of step 630 depends.

Depending on the subset used for selection, the type of selection mechanism applied by the wireless communication device may be subject to different restrictions As a consequence, a minimum size of the subset may depend on the at least one type of selection mechanism associated with the subset.

At step 650, the wireless communication device performs one or more D2D transmissions on the at least one radio resource selected at step 640.

In some scenarios, the one or more D2D transmissions may indicate a reservation of at least one radio resource from the resource pool. In this case, the wireless communication device may restrict the reservation depending on which of the multiple types of selection mechanisms is applied by the wireless communication device for selection of the at least on radio resource at step 640. For example, the restriction may require that the reserved at least one radio resource is from the same one or more subsets as used at step 640 for selection of the at least one radio resource for the D2D transmission indicating the reservation.

At step 660, the wireless communication device may adapt at least one of the subsets of radio resources, e.g., by addition or removal of frequency resources and/or by addition or removal of time resources. For example, wherein the wireless communication device may adapt the at least one of the subsets based on one or more operational conditions in the wireless communication network, e.g., based on occupancy levels or congestion levels of the subsets, and/or based on a traffic load generated by wireless communication devices that are allowed to select radio resources from the subset. In addition or as an alternative, the wireless communication device may adapt the at least one of the subsets based on priority of a D2D transmission to be performed to the wireless communication device. In addition or as an alternative, the wireless communication device may adapt the at least one of the subsets based on success or failure of one or more earlier D2D transmissions by the wireless communication device.

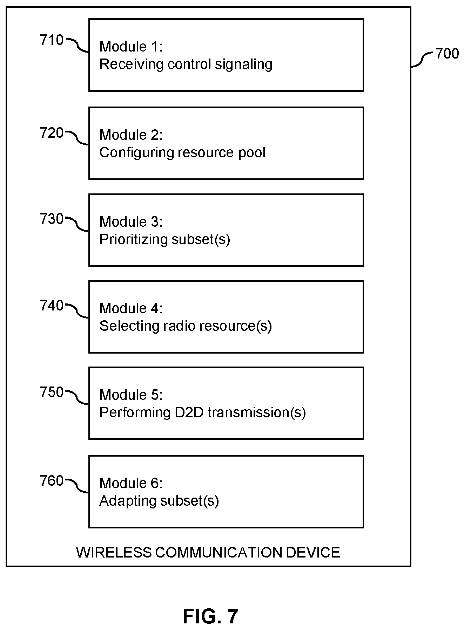

Fig. 7 shows a block diagram for illustrating functionalities of a wireless communication device 700 which operates according to the method of Fig. 6. The wireless communication device 700 may for example correspond to any of the above-mentioned UEs 10. As illustrated, the wireless communication device 700 may be provided with a module 710 configured to received control signalling, such as explained in connection with step 610. Further, the wireless communication device 700 may be provided with a module 720 configured to configure a resource pool divided into subsets, such as explained in connection with step 620. Further, the wireless communication device 700 may be provided with a module 730 configured to prioritize the subsets, such as explained in connection with step 630. Further, the wireless communication device 700 may be provided with a module 740 configured to select at least one radio resource from the resource pool, such as explained in connection with step 640. Further, the wireless communication device 700 may be provided with a module 750 configured to perform one or more D2D transmissions, such as explained in connection with step 650. Further, the wireless communication device 700 may be provided with a module 760 configured to adapt at least one of the subsets, such as explained in connection with step 660.

It is noted that the wireless communication device 700 may include further modules for implementing other functionalities, such as known functionalities of a UE in the LTE and/or NR radio technology. Further, it is noted that the modules of the wireless communication device 700 do not necessarily represent a hardware structure of the wireless communication device 700, but may also correspond to functional elements, e.g., implemented by hardware, software, or a combination thereof.

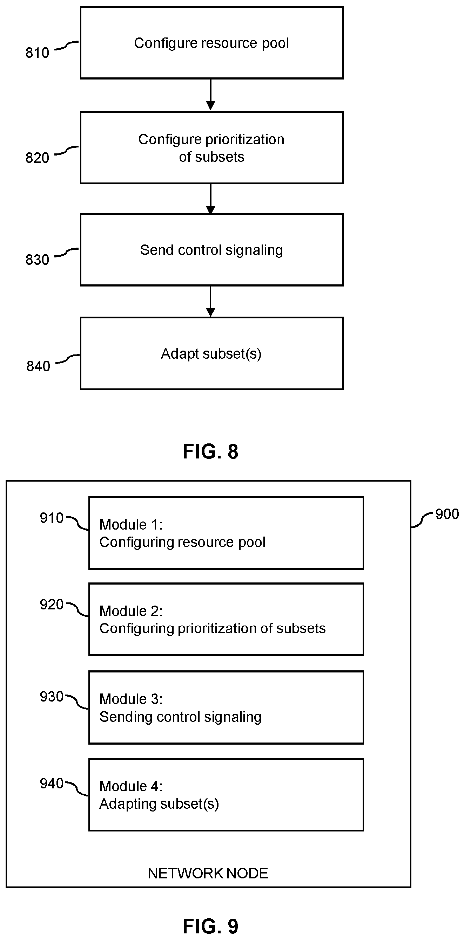

Fig. 8 shows a flowchart for illustrating a method, which may be utilized for implementing the illustrated concepts. The method of Fig. 8 may be used for implementing the illustrated concepts in a node of a wireless communication network, e.g., corresponding to the above-mentioned access node 100. In particular, the method of Fig. 8 may be used to configure a wireless communication device for operation according to the method of Fig. 6.

If a processor-based implementation of the node is used, at least some of the steps of the method of Fig. 8 may be performed and/or controlled by one or more processors of the node. Such node may also include a memory storing program code for implementing at least some of the below described functionalities or steps of the method of Fig. 8.

At step 810, the node configures a resource pool for selection of radio resources for D2D transmissions by wireless communication devices, the wireless communication devices may for example correspond to the above-mentioned UEs 10. The resource pool is divided into multiple subsets of radio resources which are each associated with at least one of multiple types of selection mechanisms.

The types of selection mechanism may include a type of selection mechanism based on random selection of radio resources. In addition or as an alternative, the types of selection mechanism may include a type of selection mechanism based on sensing of the resource pool to estimate a future occupation status of radio resources in the resource pool. In addition or as an alternative, the types of selection mechanism may include a type of selection mechanism based on partial sensing of the resource pool to estimate a future occupation status of radio resources in the resource pool. In addition or as an alternative, the types of selection mechanism may include a type of selection mechanism based on network controlled selection of radio resources.

As for example illustrated in Fig. 4, the subsets may be distinct in frequency domain. However, they could also be distinguished in the time domain.

At step 820, the node may configure at least one of the wireless communication devices to perform prioritization of the subsets and select at least one radio resource from the resource pool based on the prioritization of the subsets. The prioritization depends on which of the multiple types of selection mechanisms is applied by the respective wireless communication device for selection of radio resources for D2D transmissions. For example, the wireless communication device may prioritize that subset which to which the type of selection mechanism applied by the wireless communication device is associated.

In some scenarios, the prioritization of the subsets may involve prioritizing selection from the subset associated with the type of selection mechanism applied by the wireless communication device over selection from one or more of the other subsets, e.g., associated with another type of selection mechanism.

In some scenarios, the prioritization of the subsets may involve allowing selection from one or more of the other subsets if selection from the subset associated with the type of selection mechanism applied by the wireless communication device fails.

In some scenarios, the prioritization of the subsets may involve performing selection from the subset associated with the type of selection mechanism applied by the wireless communication device with a first probability and performing selection from one or more of the other subsets with a second probability which is lower than the first probability.

In some scenarios, at least one of the types of selection mechanisms is based on comparison of measured signal strengths to at least one threshold. In such cases, the prioritization may involve setting different values of the threshold for at least some of the subsets.

In some scenarios, the prioritization of the subsets may involve restricting the selection of radio resources to a subgroup of one or more of the subsets.

In some scenarios, the prioritization of the subsets may be based on occupancy levels of the subsets, e.g., measured in terms of a CBR.

In some scenarios, step 830 may further involve that the node configures the at least one of the wireless communication devices to, depending on which of the multiple types of selection mechanisms is applied by the respective wireless communication device for selection of radio resources for D2D transmissions, restrict a reservation of at least one radio resource indicated by a D2D transmission on the selected at least one radio resource. For example, the restriction may require that the reserved at least one radio resource is from the same one or more subsets used for selection of the at least one radio resource for the D2D transmission indicating the reservation.

Depending on the subset used for selection, the type of selection mechanism applied by the wireless communication device may be subject to different restrictions. As a consequence, a minimum size of the subset may depend on the at least one type of selection mechanism associated with the subset.

At step 830, the node may send control signaling. The control signaling may for example indicate the configuration of the resource pool from step 810 and/or the configuration of the prioritization from step 820. In addition or as an alternative, the control signaling may indicate division of the resource pool of into multiple subsets of radio resources. For example, the control signalling may indicate at least one of the subsets, e.g., in terms of frequency resources and/or time resources included in the subset. Further, the control signaling may indicate a priority of at least one of the subsets, e.g., in terms of a priority value. Further, the control signaling may indicate an association of the subsets of radio resources to types of selection mechanisms to be applied for selection of radio resources for D2D transmissions, e.g., in terms of a mapping.

In some scenarios, the resource pool could at least in part be preconfigured in the wireless communication devices, e.g., based on a standard and/or based on network operator settings, and the control signaling may be used for additional configurations or modification of the preconfigured resource pool.

In some scenarios, the wireless device use the control signaling for locally configuring at least one of the subsets. Alternatively or in addition, at least one of the subsets may be preconfigured in the wireless communication device, e.g., based on a standard and/or based on network operator settings.

The control signaling of step 830 may include one or more broadcast messages, e.g., as explained in connection with Fig. 5A. Alternatively or in addition, the control signaling of step 830 may include one or more unicast messages, e.g., as explained in connection with Fig. 5B.

At step 840, the node may adapt at least one of the subsets, e.g., by addition or removal of frequency resources.. For example, step 840 may involve that the node adapts at least one of the subsets of radio resources and indicating the adapted subset to the at least one wireless communication device. In addition or as an alternative, step 840 may involve that the node adapts the at least one of the subsets based on a number of the wireless communication devices utilizing the resource pool. In addition or as an alternative, step 840 may involve that the node adapts the at least one of the subsets based on a number of the wireless communication devices utilizing the resource pool based on the at least one type of selection mechanism associated with the at least one subset. In addition or as an alternative, step 840 may involve that the node adapts the at least one of the subsets based on a congestion level of the resource pool. In addition or as an alternative, step 840 may involve that the node adapts wherein the node adapts the at least one of the subsets based on congestion levels of the subsets. The congestion levels may for example be measured in terms of a CBR.

Fig. 9 shows a block diagram for illustrating functionalities of a network node 900 which operates according to the method of Fig. 8. The network node 900 may for example correspond to any of the above-mentioned access nodes 100. As illustrated, the network node 900 may be provided with a module 910 adapted to configure a resource pool for selection of radio resources for D2D transmissions, such as explained in connection with step 810. Further, the network node 900 may be provided with a module 920 adapted to configure at least one wireless communication device to perform prioritization of subsets of the resource pool, such as explained in connection with step 820. Further, the network node 900 may be provided with a module 930 adapted to send control signalling, such as explained in connection with step 830. Further, the network node 900 may be provided with a module 940 adapted to adapt at least one of the subsets, such as explained in connection with step 840.

It is noted that the network node 900 may include further modules for implementing other functionalities, such as known functionalities of an eNB in the LTE technology and/or of a gNB of the NR technology. Further, it is noted that the modules of the network node 900 do not necessarily represent a hardware structure of the network node 900, but may also correspond to functional elements, e.g., implemented by hardware, software, or a combination thereof.

It is to be understood that the functionalities as described in connection with Figs. 6 to 9 may also be combined in various ways, e.g., in a system which includes one or more wireless communication devices operating according to the method of Fig. 6 and a node operating according to the method of Fig. 8 which is used to configure at least one of the one or more wireless communication devices.

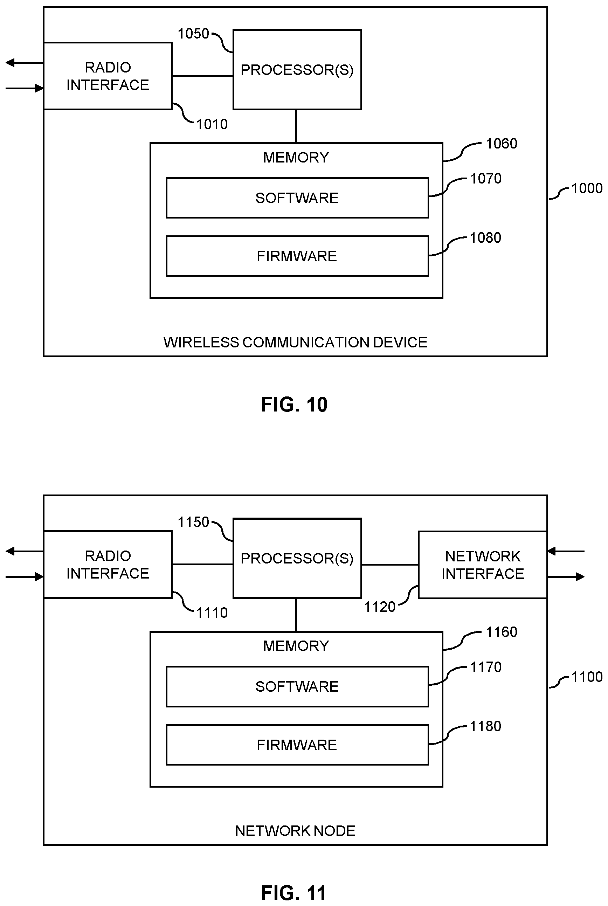

Fig. 10 illustrates a processor-based implementation of a wireless communication device 1000 which may be used for implementing the above-described concepts. For example, the structures as illustrated in Fig. 10 may be used for implementing the concepts in any of the above-mentioned UEs.

As illustrated, the wireless communication device 1000 includes one or more radio interfaces 1010. The radio interface(s) 1010 may for example be based on the NR technology or the LTE technology. The radio interface(s) 1010 may support D2D communication, e.g., using SL communication as specified for the NR technology or the LTE technology.

Further, the wireless communication device 1000 may include one or more processors 1050 coupled to the radio interface(s) 1010 and a memory 1060 coupled to the processor(s) 1050. By way of example, the radio interface(s) 1010, the processor(s) 1050, and the memory 1060 could be coupled by one or more internal bus systems of the wireless communication device 1000. The memory 1060 may include a Read-Only-Memory (ROM), e.g., a flash ROM, a Random Access Memory (RAM), e.g., a Dynamic RAM (DRAM) or Static RAM (SRAM), a mass storage, e.g., a hard disk or solid state disk, or the like. As illustrated, the memory 1060 may include software 1070 and/or firmware 1080. The memory 1060 may include suitably configured program code to be executed by the processor(s) 1050 so as to implement the above-described functionalities for controlling D2D communication, such as explained in connection with Fig. 6.

It is to be understood that the structures as illustrated in Fig. 10 are merely schematic and that the wireless communication device 1000 may actually include further components which, for the sake of clarity, have not been illustrated, e.g., further interfaces, such as a dedicated management interface, or further processors. Also, it is to be understood that the memory 1060 may include further program code for implementing known functionalities of a UE. According to some embodiments, also a computer program may be provided for implementing functionalities of the wireless communication device 1000, e.g., in the form of a physical medium storing the program code and/or other data to be stored in the memory 1060 or by making the program code available for download or by streaming.

Fig. 11 illustrates a processor-based implementation of a node 1100 for a wireless communication network, which may be used for implementing the above-described concepts. For example, the structures as illustrated in Fig. 11 may be used for implementing the concepts in any of the above-mentioned access nodes 100.

As illustrated, the node 1100 may include one or more radio interfaces 1110. The radio interface(s) 11610 may for example be based on the NR technology or the LTE technology. The radio interface(s) 1110 may be used for controlling wireless communication devices, such as any of the above-mentioned UEs. In addition, the node 1100 may include one or more network interfaces 1120. The network interface(s) 1120 may for example be used for communication with one or more other nodes of the wireless communication network. Also the network interface(s) 1120 may be used for controlling wireless communication devices, such as any of the above-mentioned UEs.

Further, the node 1100 may include one or more processors 1150 coupled to the interface(s) 1110, 1120 and a memory 1160 coupled to the processor(s) 1150. By way of example, the interface(s) 1610, the processor(s) 1150, and the memory 1160 could be coupled by one or more internal bus systems of the node 1100. The memory 1160 may include a ROM, e.g., a flash ROM, a RAM, e.g., a DRAM or SRAM, a mass storage, e.g., a hard disk or solid state disk, or the like. As illustrated, the memory 1160 may include software 1170 and/or firmware 1680. The memory 1160 may include suitably configured program code to be executed by the processor(s) 1150 so as to implement the above-described functionalities for controlling D2D communication, such as explained in connection with Fig. 8.

It is to be understood that the structures as illustrated in Fig. 11 are merely schematic and that the node 1100 may actually include further components which, for the sake of clarity, have not been illustrated, e.g., further interfaces, such as a dedicated management interface, or further processors. Also, it is to be understood that the memory 1160 may include further program code for implementing known functionalities of an eNB or of a gNB. According to some embodiments, also a computer program may be provided for implementing functionalities of the node 1100, e.g., in the form of a physical medium storing the program code and/or other data to be stored in the memory 1160 or by making the program code available for download or by streaming.

As can be seen, the concepts as described above may be used for efficiently utilization of a resource pool for D2D transmissions by multiple wireless communication devices utilizing different types of resource selection mechanisms. In particular, the concepts may help to reduce the overall risk of collisions in a resource pool that is shared by FS UEs, PS UEs, and/or RS UEs. The concepts may allow for flexible separation of the resource pool in several subsets of radio resources in the frequency domain and/or time domain. The size of the subsets can be adapted, e.g., to suit the number of FS UEs, PS UEs, and/or RS UEs operating on the resource pool. Further, the adaptation may also depend on the size of the partial sensing window used by PS UE; or based on previous failures of transmission. The adaptation may allow for a more efficient operation according to the system conditions. Further, the concepts may be implemented without affecting legacy devices, because the prioritization of the subsets does not need to be implemented by all UEs operating on the shared resource pool.

It is to be understood that the examples and embodiments as explained above are merely illustrative and susceptible to various modifications. For example, the illustrated concepts may be applied in connection with various kinds of radio technologies and D2D communication, without limitation the SL mode of the LTE technology or NR technology, e.g., in connection with WLAN technologies or other wireless ad-hoc network technologies. Further, the concepts may be applied with respect to various types of UEs, without limitation to vehicle-based UEs. Further, the concepts may be applied in connection with various services supported by D2D communication, without limitation to V2X, NSPS, or NCIS. Further, it is noted that although the examples described above assume an autonomous resource allocation process performed by the UE, similar processes could also be defined for network-based or network assisted resource selection processes.

Moreover, it is to be understood that the above concepts may be implemented by using correspondingly designed software to be executed by one or more processors of an existing device or apparatus, or by using dedicated device hardware. Further, it should be noted that the illustrated apparatuses or devices may each be implemented as a single device or as a system of multiple interacting devices or modules.

## Claims

1. A method of controlling D2D communication in a wireless communication network, the method comprising:
a wireless communication device (10; 700; 1000) configuring a resource pool for selection of radio resources for D2D transmissions by the wireless communication device (10; 700; 1000), the resource pool being divided into multiple subsets (S1, S2, S3) of radio resources which are each associated with at least one of multiple types of selection mechanisms;
depending on which of the multiple types of selection mechanisms is applied by the wireless communication device (10; 700; 1000) for selection of radio resources for D2D transmissions, the wireless communication device (10; 700; 1000) performing prioritization of the subsets (S1, S2, S3) of radio resources;
based on the prioritization of the subsets (S1, S2, S3) and using the applied type of selection mechanism, the wireless communication device (10; 700; 1000) selecting at least one radio resource from the resource pool; and
the wireless communication device (10; 700; 1000) performing one or more D2D transmissions on the selected at least one radio resource.

2. The method according to claim 1, comprising:
the wireless communication device (10; 700; 1000) receiving control signaling (502; 512, 513, 514) indicating a priority of at least one of the subsets (S1, S2, S3); and/or
the wireless communication device (10; 700; 1000) receiving control signaling (502; 512, 513, 514) indicating the association of the subsets (S1, S2, S3) of radio resources to the types of selection mechanisms and, based on the indicated association, the wireless communication device (10; 700; 1000) determining a priority of at least one of the subsets (S1, S2, S3); and/or the wireless communication device (10; 700; 1000) receiving control signaling (502; 512, 513, 514) indicating at least one of the subsets (S1, S2, S3).

3. The method according to any one of the preceding claims,
wherein said prioritization of the subsets (S1, S2, S3) comprises prioritizing selection from the subset (S1, S2, S3) associated with the type of selection mechanism applied by the wireless communication device (10; 700; 1000) over selection from one or more of the other subsets (S1, S2, S3) and allowing selection from one or more of the other subsets (S1, S2, S3) if selection from the subset (S1, S2, S3) associated with the type of selection mechanism applied by the wireless communication device (10; 700; 1000) fails and/or performing selection from the subset (S1, S2, S3) associated with the type of selection mechanism applied by the wireless communication device (10; 700; 1000) with a first probability and performing selection from one or more of the other subsets (S1, S2, S3) with a second probability which is lower than the first probability.

4. The method according to any one of the preceding claims,
wherein at least one of the types of selection mechanisms is based on comparison of measured signal strengths to at least one threshold and said prioritization of the subsets (S1, S2, S3) comprises setting different values of the threshold for at least some of the subsets (S1, S2, S3), and/or
wherein said prioritization of the subsets (S1, S2, S3) comprises restricting the selection of radio resources to a subgroup of one or more of the subsets (S1, S2, S3), and/or
wherein said prioritization is based on occupancy levels of the subsets (S1, S2, S3).

5. The method according to any one of the preceding claims, comprising:
depending on which of the multiple types of selection mechanisms is applied by the wireless communication device (10; 700; 1000) for selection of radio resources for D2D transmissions, the wireless communication device (10; 700; 1000) restricting a reservation of at least one radio resource indicated by a D2D transmission on the selected at least one radio resource,
wherein the restriction requires that the reserved at least one radio resource is from the same one or more subsets (S1, S2, S3) used for selection of the at least one radio resource for the D2D transmission indicating the reservation.

6. The method according to any one of the preceding claims,
wherein depending on the subset (S1, S2, S3) used for selection, the type of selection mechanism applied by the wireless communication device (10; 700; 1000) is subject to different restrictions, and/or
wherein a minimum size of the subset (S1, S2, S3) depends on the at least one type of selection mechanism associated with the subset (S1, S2, S3).

7. The method according to any one of the preceding claims, comprising:
the wireless communication device (10; 700; 1000) adapting at least one of the subsets (S1, S2, S3) of radio resources based on:
- one or more operational conditions in the wireless communication network, and/or
- - priority of a D2D transmission to be performed to the wireless communication device (10; 700; 1000), and/
- - success or failure of one or more earlier D2D transmissions by the wireless communication device (10; 700; 1000).

8. The method according to any one of the preceding claims,
wherein the types of selection mechanism comprise a type of selection mechanism based on random selection of radio resources, and/or a type of selection mechanism based on sensing of the resource pool to estimate a future occupation status of radio resources in the resource pool, and/or a type of selection mechanism based on partial sensing of the resource pool to estimate a future occupation status of radio resources in the resource pool, and/or a type of selection mechanism based on network controlled selection of radio resources.

9. A method of controlling D2D communication in a wireless communication network, the method comprising:
a node (100; 900; 1100) of the wireless communication network configuring a resource pool for selection of radio resources for D2D transmissions by wireless communication devices (10; 700; 1000), the resource pool being divided into multiple subsets (S1, S2, S3) of radio resources which are each associated with at least one of multiple types of selection mechanisms; and
the node (100; 900; 1100) configuring at least one of the wireless communication devices (10; 700; 1000) to, depending on which of the multiple types of selection mechanisms is applied by the respective wireless communication device (10; 700; 1000) for selection of radio resources for D2D transmissions, perform prioritization of the subsets (S1, S2, S3) of radio resources and select at least one radio resource from the resource pool based on the prioritization of the subsets (S1, S2, S3).

10. The method according to claim 9, comprising:
the node (100; 900; 1100) sending control signaling (502; 512, 513, 514) indicating a priority of at least one of the subsets (S1, S2, S3) to the at least one of the wireless communication devices (10; 700; 1000); and/or
the node (100; 900; 1100) sending control signaling (502; 512, 513, 514) indicating the association of the subsets (S1, S2, S3) of radio resources to the types of selection mechanisms; and/or
the node (100; 900; 1100) sending control signaling (502; 512, 513, 514) indicating at least one of the subsets (S1, S2, S3) to the at least one of the wireless communication devices (10; 700; 1000).

11. The method according to claim 9 or 10, comprising:
the node (100; 900; 1100) configuring the at least one of the wireless communication devices (10; 700; 1000) to, depending on which of the multiple types of selection mechanisms is applied by the respective wireless communication device (10; 700; 1000) for selection of radio resources for D2D transmissions, restrict a reservation of at least one radio resource indicated by a D2D transmission on the selected at least one radio resource,
wherein the restriction requires that the reserved at least one radio resource is from the same one or more subsets (S1, S2, S3) used for selection of radio resources for the D2D transmission indicating the reservation.

12. The method according to any one of claims 9 to 11,
wherein depending on the subset (S1, S2, S3) used for selection, the type of selection mechanism applied by the wireless communication device (10; 700; 1000) is subject to different restrictions, and/or
wherein a minimum size of the subset (S1, S2, S3) depends on the at least one type of selection mechanism associated with the subset (S1, S2, S3).

13. The method according to any one of claims 9 to 12, comprising:
the node (100; 900; 1100) adapting at least one of the subsets (S1, S2, S3) of radio resources and indicating the adapted subset (S1, S2, S3) to the at least one wireless communication device (10; 700; 1000),
wherein the node (100; 900; 1100) adapts the at least one of the subsets (S1, S2, S3) based on:
- a number of the wireless communication devices (10; 700; 1000) utilizing the resource pool, and/or
- - a number of the wireless communication devices (10; 700; 1000) utilizing the resource pool based on the at least one type of selection mechanism associated with the at least one subset (S1, S2, S3), and/or
- - a congestion level of the resource pool, and/or
- congestion levels of the subsets (S1, S2, S3).

14. The method according to any one of claims 9 to 13,
wherein the types of selection mechanism comprise a type of selection mechanism based on random selection of radio resources, and/or a type of selection mechanism based on sensing of the resource pool to estimate a future occupation status of radio resources in the resource pool, and/or a type of selection mechanism based on partial sensing of the resource pool to estimate a future occupation status of radio resources in the resource pool, and/or a type of selection mechanism based on network controlled selection of radio resources.

15. A wireless communication device (10; 700; 1000), the wireless communication device (10; 700; 1000) being adapted to:
configure a resource pool for selection of radio resources for D2D transmissions by the wireless communication device (10; 700; 1000), the resource pool being divided into multiple subsets (S1, S2, S3) of radio resources which are each associated with at least one of multiple types of selection mechanisms;
depending on which of the multiple types of selection mechanisms is applied by the wireless communication device (10; 700; 1000) for selection of radio resources for D2D transmissions, perform prioritization of the subsets (S1, S2, S3) of radio resources;
based on the prioritization of the subsets (S1, S2, S3) and using the applied type of selection mechanism, select at least one radio resource from the resource pool; and
perform one or more D2D transmissions on the selected at least one radio resource.

16. A node (100; 900; 1100) for a wireless communication network, the node (100; 900; 1100) being adapted to:
configure a resource pool for selection of radio resources for D2D transmissions by wireless communication devices (10; 700; 1000), the resource pool being divided into multiple subsets (S1, S2, S3) of radio resources which are each associated with at least one of multiple types of selection mechanisms; and
configure at least one of the wireless communication devices (10; 700; 1000) to, depending on which of the multiple types of selection mechanisms is applied by the respective wireless communication device (10; 700; 1000) for selection of radio resources for D2D transmissions, perform prioritization of the subsets (S1, S2, S3) of radio resources and select at least one radio resource from the resource pool based on the prioritization of the subsets (S1, S2, S3).

17. A computer program or computer program product comprising:
- program code to be executed by at least one processor (1050) of a wireless communication device (10; 700; 1000), whereby execution of the program code causes the wireless communication device (10; 700; 1000) to perform a method according to any one of claims 1 to 8; and/or
- program code to be executed by at least one processor (1150) of a node (100; 900; 1100) for a wireless communication network, whereby execution of the program code causes the node (100; 900; 1100) to perform a method according to any one of claims 9 to 14.

## Patentansprüche

1. Verfahren zum Steuern von D2D-Kommunikation in einem drahtlosen Kommunikationsnetz, das Verfahren umfassend:
eine drahtlose Kommunikationsvorrichtung (10; 700; 1000), die einen Ressourcenpool zur Auswahl von Funkressourcen für D2D-Übertragungen durch die drahtlose Kommunikationsvorrichtung (10; 700; 1000) konfiguriert, wobei der Ressourcenpool in mehrere Teilmengen (S1, S2, S3) von Funkressourcen unterteilt ist, die jeweils mindestens einem von mehreren Typen von Auswahlmechanismen zugeordnet sind;
Durchführen, abhängig davon, welcher der mehreren Typen von Auswahlmechanismen von der drahtlosen Kommunikationsvorrichtung (10; 700; 1000) zur Auswahl von Funkressourcen für D2D-Übertragungen angewendet wird, durch die drahtlose Kommunikationsvorrichtung (10; 700; 1000), einer Priorisierung der Teilmengen (S1, S2, S3) von Funkressourcen;
Auswählen, basierend auf der Priorisierung der Teilmengen (S1, S2, S3) und unter Verwendung des angewendeten Typs des Auswahlmechanismus, durch die drahtlose Kommunikationsvorrichtung (10; 700; 1000), mindestens einer Funkressource aus dem Ressourcenpool; und
Durchführen, durch die drahtlose Kommunikationsvorrichtung (10; 700; 1000), einer oder mehrerer D2D-Übertragungen über die ausgewählte mindestens eine Funkressource.

2. Verfahren nach Anspruch 1, umfassend:
Empfangen, durch die drahtlose Kommunikationsvorrichtung (10; 700; 1000), einer Steuerungssignalisierung (502; 512, 513, 514), die eine Priorität von mindestens einer der Teilmengen (S1, S2, S3) angibt; und/oder
Empfangen, durch die drahtlose Kommunikationsvorrichtung (10; 700; 1000), einer Steuerungssignalisierung (502; 512, 513, 514), welche die Zuordnung der Teilmengen (S1, S2, S3) von Funkressourcen zu den Typen von Auswahlmechanismen angibt, und, basierend auf der angegebenen Zuordnung, Bestimmen, durch die drahtlose Kommunikationsvorrichtung (10; 700; 1000), einer Priorität von mindestens einer der Teilmengen (S1, S2, S3); und/oder
Empfangen, durch die drahtlose Kommunikationsvorrichtung (10; 700; 1000), einer Steuerungssignalisierung (502; 512, 513, 514), die mindestens eine der Teilmengen (S1, S2, S3) angibt.

3. Verfahren nach einem der vorstehenden Ansprüche,
wobei die Priorisierung der Teilmengen (S1, S2, S3) das Priorisieren der Auswahl aus der Teilmenge (S1, S2, S3), die dem Typ des von der drahtlosen Kommunikationsvorrichtung (10; 700; 1000) angewendeten Auswahlmechanismus zugeordnet ist, gegenüber der Auswahl aus einer oder mehreren der anderen Teilmengen, (S1, S2, S3) und das Zulassen der Auswahl aus einer oder mehreren der anderen Teilmengen (S1, S2, S3), wenn die Auswahl aus der Teilmenge (S1, S2, S3), die dem Typ des von der drahtlosen Kommunikationsvorrichtung (10; 700; 1000) angewendeten Auswahlmechanismus zugeordnet ist, fehlschlägt, und/oder das Durchführen der Auswahl aus der Teilmenge (S1, S2, S3), die dem Typ des von der drahtlosen Kommunikationsvorrichtung (10; 700; 1000) angewendeten Auswahlmechanismus zugeordnet ist, mit einer ersten Wahrscheinlichkeit, und das Durchführen der Auswahl aus einer oder mehreren der anderen Teilmengen (S1, S2, S3) mit einer zweiten Wahrscheinlichkeit, die niedriger als die erste Wahrscheinlichkeit ist, umfasst.

4. Verfahren nach einem der vorstehenden Ansprüche,
wobei mindestens einer der Typen von Auswahlmechanismen auf dem Vergleich von gemessenen Signalstärken mit mindestens einer Schwelle basiert und die Priorisierung der Teilmengen (S1, S2, S3) das Einstellen unterschiedlicher Werte der Schwelle für mindestens einige der Teilmengen (S1, S2, S3) umfasst, und/oder
wobei die Priorisierung der Teilmengen (S1, S2, S3) das Beschränken der Auswahl von Funkressourcen auf eine Untergruppe einer oder mehrerer der Teilmengen (S1, S2, S3) umfasst, und/oder
wobei die Priorisierung auf den Belegungsgraden der Teilmengen (S1, S2, S3) basiert.

5. Verfahren nach einem der vorstehenden Ansprüche, umfassend:
abhängig davon, welcher der mehreren Typen von Auswahlmechanismen von der drahtlosen Kommunikationsvorrichtung (10; 700; 1000) für die Auswahl von Funkressourcen für D2D-Übertragungen angewendet wird, Beschränken, durch die drahtlose Kommunikationsvorrichtung (10; 700; 1000), einer Reservierung von mindestens einer Funkressource, die durch eine D2D-Übertragung angegeben wird, auf die ausgewählte mindestens eine Funkressource, wobei die Beschränkung erfordert, dass die reservierte mindestens eine Funkressource aus derselben oder mehreren Teilmengen (S1, S2, S3) stammt, die zur Auswahl der mindestens einen Funkressource für die die Reservierung angebende D2D-Übertragung verwendet wird.

6. Verfahren nach einem der vorstehenden Ansprüche,
wobei, abhängig von der für die Auswahl verwendeten Teilmenge (S1, S2, S3), der Typ des von der drahtlosen Kommunikationsvorrichtung (10; 700; 1000) angewendeten Auswahlmechanismus unterschiedlichen Beschränkungen unterliegt, und/oder
wobei eine Mindestgröße der Teilmenge (S1, S2, S3) von dem mindestens einen Typ des Auswahlmechanismus abhängt, welcher der Teilmenge (S1, S2, S3) zugeordnet ist.

7. Verfahren nach einem der vorstehenden Ansprüche, umfassend:
Anpassen, durch die drahtlose Kommunikationsvorrichtung (10; 700; 1000), von mindestens einer der Teilmengen (S1, S2, S3) von Funkressourcen basierend auf:
- einer oder mehreren Betriebsbedingungen im drahtlosen Kommunikationsnetz, und/oder
- Priorität einer durchzuführenden D2D-Übertragung an die drahtlose Kommunikationsvorrichtung (10; 700; 1000), und/
- Erfolg oder Fehlschlag einer oder mehrerer früherer D2D-Übertragungen durch die drahtlose
Kommunikationsvorrichtung (10; 700; 1000).

8. Verfahren nach einem der vorstehenden Ansprüche,
wobei die Typen von Auswahlmechanismen einen Typ von Auswahlmechanismen basierend auf einer zufälligen Auswahl von Funkressourcen und/oder einen Typ von Auswahlmechanismen basierend auf einer Erfassung des Ressourcenpools, um einen zukünftigen Belegungsstatus von Funkressourcen im Ressourcenpool abzuschätzen, und/oder einen Typ von Auswahlmechanismen basierend auf einer teilweisen Erfassung des Ressourcenpools, um einen zukünftigen Belegungsstatus von Funkressourcen im Ressourcenpool abzuschätzen, und/oder einen Typ von Auswahlmechanismen basierend auf einer netzwerkgesteuerten Auswahl von Funkressourcen umfassen.

9. Verfahren zum Steuern von D2D-Kommunikation in einem drahtlosen Kommunikationsnetz, das Verfahren umfassend:
Konfigurieren, durch einen Knoten (100; 900; 1100), des drahtlosen Kommunikationsnetzes, eines Ressourcenpools zur Auswahl von Funkressourcen für D2D-Übertragungen durch drahtlose Kommunikationsvorrichtungen (10; 700; 1000), wobei der Ressourcenpool in mehrere Teilmengen (S1, S2, S3) von Funkressourcen unterteilt ist, die jeweils mindestens einem von mehreren Typen von Auswahlmechanismen zugeordnet sind; und
Konfigurieren, durch den Knoten (100; 900; 1100), von mindestens einer der drahtlosen Kommunikationsvorrichtungen (10; 700; 1000), um, abhängig davon, welcher der mehreren Typen von Auswahlmechanismen durch die jeweilige drahtlose Kommunikationsvorrichtung (10; 700; 1000) zur Auswahl von Funkressourcen für D2D-Übertragungen angewendet wird, eine Priorisierung der Teilmengen (S1, S2, S3) von Funkressourcen durchzuführen und mindestens eine Funkressource aus dem Ressourcenpool basierend auf der Priorisierung der Teilmengen (S1, S2, S3) auszuwählen.

10. Verfahren nach Anspruch 9, umfassend:
Senden, durch den Knoten (100; 900; 1100), einer Steuerungssignalisierung (502; 512, 513, 514), die eine Priorität von mindestens einer der Teilmengen (S1, S2, S3) an die mindestens eine der drahtlosen Kommunikationsvorrichtungen (10; 700; 1000) angibt; und/oder
Senden, durch den Knoten (100; 900; 1100), einer Steuerungssignalisierung (502; 512, 513, 514), welche die Zuordnung der Teilmengen (S1, S2, S3) von Funkressourcen zu den Typen von Auswahlmechanismen angibt; und/oder
Senden, durch den Knoten (100; 900; 1100), einer Steuerungssignalisierung (502; 512, 513, 514), die mindestens eine der Teilmengen (S1, S2, S3) an die mindestens eine der drahtlosen Kommunikationsvorrichtungen (10; 700; 1000) angibt.

11. Verfahren nach Anspruch 9 oder 10, umfassend:
Konfigurieren, durch den Knoten (100; 900; 1100), der mindestens einen der drahtlosen Kommunikationsvorrichtungen (10; 700; 1000), um, abhängig davon, welcher der mehreren Typen von Auswahlmechanismen durch die jeweilige drahtlose Kommunikationsvorrichtung (10; 700; 1000) zur Auswahl von Funkressourcen für D2D-Übertragungen angewendet wird, eine Reservierung von mindestens einer Funkressource, die durch eine D2D-Übertragung angegeben wird, auf die ausgewählte mindestens eine Funkressource zu beschränken,
wobei die Beschränkung erfordert, dass die reservierte mindestens eine Funkressource aus derselben oder mehreren Teilmengen (S1, S2, S3) stammt, die zur Auswahl von Funkressourcen für die die Reservierung angebende D2D-Übertragung verwendet wird.

12. Verfahren nach einem der Ansprüche 9 bis 11,
wobei, abhängig von der für die Auswahl verwendeten Teilmenge (S1, S2, S3), der Typ des von der drahtlosen Kommunikationsvorrichtung (10; 700; 1000) angewendeten Auswahlmechanismus unterschiedlichen Beschränkungen unterliegt, und/oder
wobei eine Mindestgröße der Teilmenge (S1, S2, S3) von dem mindestens einen Typ des Auswahlmechanismus abhängt, welcher der Teilmenge (S1, S2, S3) zugeordnet ist.

13. Verfahren nach einem der Ansprüche 9 bis 12, umfassend:
Anpassen, durch den Knoten (100; 900; 1100), von mindestens einer der Teilmengen (S1, S2, S3) von Funkressourcen, und Angeben der angepassten Teilmenge (S1, S2, S3) an die mindestens eine drahtlose Kommunikationsvorrichtung (10; 700; 1000),
wobei der Knoten (100; 900; 1100) mindestens eine der Teilmengen (S1, S2, S3) anpasst basierend auf:
- einer Anzahl der drahtlosen Kommunikationsvorrichtungen (10; 700; 1000), die den Ressourcenpool nutzen, und/oder
- - einer Anzahl der drahtlosen Kommunikationsvorrichtungen (10; 700; 1000), die den Ressourcenpool basierend auf mindestens einem Typ von Auswahlmechanismus nutzen, welcher der mindestens einen Teilmenge (S1, S2, S3) zugeordnet ist, und/oder
- einem Überlastungsgrad des Ressourcenpools, und/oder
- Überlastungsgraden der Teilmengen (S1, S2, S3).

14. Verfahren nach einem der Ansprüche 9 bis 13,
wobei die Typen von Auswahlmechanismen einen Typ von Auswahlmechanismen basierend auf einer zufälligen Auswahl von Funkressourcen und/oder einen Typ von Auswahlmechanismen basierend auf einer Erfassung des Ressourcenpools, um einen zukünftigen Belegungsstatus von Funkressourcen im Ressourcenpool abzuschätzen, und/oder einen Typ von Auswahlmechanismen basierend auf einer teilweisen Erfassung des Ressourcenpools, um einen zukünftigen Belegungsstatus von Funkressourcen im Ressourcenpool abzuschätzen, und/oder einen Typ von Auswahlmechanismen basierend auf einer netzwerkgesteuerten Auswahl von Funkressourcen umfassen.

15. Drahtlose Kommunikationsvorrichtung (10; 700; 1000), wobei die drahtlose Kommunikationsvorrichtung (10; 700; 1000) angepasst ist zum:
Konfigurieren eines Ressourcenpools zur Auswahl von Funkressourcen für D2D-Übertragungen durch die drahtlose Kommunikationsvorrichtung (10; 700; 1000), wobei der Ressourcenpool in mehrere Teilmengen (S1, S2, S3) von Funkressourcen unterteilt ist, die jeweils mindestens einem von mehreren Typen von Auswahlmechanismen zugeordnet sind;
Durchführen, abhängig davon, welcher der mehreren Typen von Auswahlmechanismen von der drahtlosen Kommunikationsvorrichtung (10; 700; 1000) zur Auswahl von Funkressourcen für D2D-Übertragungen angewendet wird, einer Priorisierung der Teilmengen (S1, S2, S3) von Funkressourcen;
Auswählen, basierend auf der Priorisierung der Teilmengen (S1, S2, S3) und unter Verwendung des angewendeten Typs des Auswahlmechanismus, mindestens einer Funkressource aus dem Ressourcenpool; und
Durchführen einer oder mehrerer D2D-Übertragungen auf der ausgewählten mindestens einen Funkressource.

16. Knoten (100; 900; 1100) für ein drahtloses Kommunikationsnetzwerk, wobei der Knoten (100; 900; 1100) angepasst ist zum:
Konfigurieren eines Ressourcenpools zur Auswahl von Funkressourcen für D2D-Übertragungen durch drahtlose Kommunikationsvorrichtungen (10; 700; 1000), wobei der Ressourcenpool in mehrere Teilmengen (S1, S2, S3) von Funkressourcen unterteilt ist, die jeweils mindestens einem von mehreren Typen von Auswahlmechanismen zugeordnet sind; und
Konfigurieren von mindestens einer der drahtlosen Kommunikationsvorrichtungen (10; 700; 1000), um, abhängig davon, welcher der mehreren Typen von Auswahlmechanismen durch die jeweilige drahtlose Kommunikationsvorrichtung (10; 700; 1000) zur Auswahl von Funkressourcen für D2D-Übertragungen angewendet wird, eine Priorisierung der Teilmengen (S1, S2, S3) von Funkressourcen durchzuführen und mindestens eine Funkressource aus dem Ressourcenpool basierend auf der Priorisierung der Teilmengen (S1, S2, S3) auszuwählen.

17. Computerprogramm oder Computerprogrammprodukt, umfassend:
- Programmcode, der durch mindestens einen Prozessor (1050) einer drahtlosen Kommunikationsvorrichtung (10; 700; 1000) ausgeführt werden soll, wobei eine Ausführung des Programmcodes die drahtlose Kommunikationsvorrichtung (10; 700; 1000) veranlasst, ein Verfahren nach einem der Ansprüche 1 bis 8 durchzuführen; und/oder
- Programmcode, der von mindestens einem Prozessor (1150) eines Knotens (100; 900; 1100) für eine drahtloses Kommunikationsnetzwerk ausgeführt werden soll, wobei die Ausführung des Programmcodes den Knoten (100; 900; 1100) veranlasst, ein Verfahren nach einem der Ansprüche 9 bis 14 durchzuführen.

## Revendications

1. Procédé de commande de communication D2D dans un réseau de communication sans fil, le procédé comprenant :
un dispositif de communication sans fil (10 ; 700 ; 1000) configurant un pool de ressources pour la sélection des ressources radio pour les transmissions D2D par le dispositif de communication sans fil (10 ; 700 ; 1000), le pool de ressources étant divisé en de multiples sous-ensembles (S1, S2, S3) de ressources radio qui sont chacun associés à au moins l'un des multiples types de mécanismes de sélection ;
en fonction duquel de multiples types de mécanismes de sélection sont appliqués par le dispositif de communication sans fil (10) ; 700 ; 1000) pour la sélection de ressources radio pour des transmissions D2D, le dispositif de communication sans fil (10 ; 700 ; 1000) effectuant une priorisation des sous-ensembles (S1, S2, S3) de ressources radio ;
en fonction de la priorisation des sous-ensembles (S1, S2, S3) et en utilisant le type de mécanisme de sélection appliqué, le dispositif de communication sans fil (10 - 700 ; 1000) sélectionnant au moins une ressource radio parmi le pool de ressources ; et
le dispositif de communication sans fil (10 ; 700 ; 1000) effectuant une ou plusieurs transmissions D2D sur l'au moins une ressource radio sélectionnée.

2. Procédé selon la revendication 1, comprenant :
le dispositif de communication sans fil (10 ; 700 ; 1000) recevant des signaux de commande (502 ; 512, 513, 514) indiquant une priorité d'au moins l'un des sous-ensembles (S1, S2, S3) ; et/ou
le dispositif de communication sans fil (10 ; 700 ; 1000) recevant des signaux de commande (502 ; 512, 513, 514) indiquant l'association des sous-ensembles (S1, S2, S3) de ressources radio aux types de mécanismes de sélection et, en fonction de l'association indiquée, le dispositif de communication sans fil (10 ; 700 ; 1000) déterminant une priorité d'au moins l'un des sous-ensembles (S1, S2, S3) ; et/ou
le dispositif de communication sans fil (10 ; 700 ; 1000) recevant des signaux de commande (502 ; 512, 513, 514) indiquant au moins l'un des sous-ensembles (S1, S2, S3).

3. Procédé selon l'une quelconque des revendications précédentes,
dans lequel ladite priorisation des sous-ensembles (S1, S2, S3) comprend la priorisation d'une sélection parmi le sous-ensemble (S1, S2, S3) associé au type de mécanisme de sélection appliqué par le dispositif de communication sans fil (10 ; 700 ; 1000) sur une sélection parmi un ou plusieurs des autres sous-ensembles (S1, S2, S3) et en autorisant une sélection parmi un ou plusieurs des autres sous-ensembles (S1, S2, S3) si une sélection dans le sous-ensemble (S1, S2, S3) associé au type de mécanisme de sélection appliqué par le dispositif de communication sans fil (10 ; 700 ; 1000) échoue et/ou en effectuant une sélection parmi le sous-ensemble (S1, S2, S3) associé au type de mécanisme de sélection appliqué par le dispositif de communication sans fil (10 ; 700 ; 1000) avec une première probabilité et en effectuant une sélection parmi un ou plusieurs des autres sous-ensembles (S1, S2, S3) avec une seconde probabilité qui est inférieure à la première probabilité.

4. Procédé selon l'une quelconque des revendications précédentes,
dans lequel au moins l'un des types de mécanismes de sélection est en fonction de la comparaison des intensités de signal mesurées à au moins un seuil et ladite priorisation des sous-ensembles (S1, S2, S3) comprend la définition de différentes valeurs du seuil pour au moins certains des sous-ensembles (S1, S2, S3), et/ou
dans lequel ladite priorisation des sous-ensembles (S1, S2, S3) comprend la restriction de la sélection des ressources radio à un sous-groupe d'un ou de plusieurs sous-ensembles (S1, S2, S3), et/ou
dans lequel ladite priorisation est en fonction des niveaux d'occupation des sous-ensembles (S1, S2, S3).

5. Procédé selon l'une quelconque des revendications précédentes, comprenant :
en fonction duquel de multiples types de mécanismes de sélection sont appliqués par le dispositif de communication sans fil (10) ; 700 ; 1000) pour la sélection de ressources radio pour des transmissions D2D, le dispositif de communication sans fil (10 ; 700 ; 1000) restreint une réservation d'au moins une ressource radio indiquée par une transmission D2D sur l'au moins une ressource radio sélectionnée, dans lequel la restriction exige que l'au moins une ressource radio réservée fasse partie du même ou des mêmes sous-ensembles (S1, S2, S3) utilisés pour la sélection de l'au moins une ressource radio pour la transmission D2D indiquant la réservation.

6. Procédé selon l'une quelconque des revendications précédentes,
dans lequel, en fonction du sous-ensemble (S1, S2, S3) utilisé pour la sélection, le type de mécanisme de sélection appliqué par le dispositif de communication sans fil (10 ; 700 ; 1000) est soumis à des restrictions différentes, et/ou
dans lequel une taille minimale du sous-ensemble (S1, S2, S3) dépend de l'au moins un type de mécanisme de sélection associé au sous-ensemble (S1, S2, S3).

7. Procédé selon l'une quelconque des revendications précédentes, comprenant :
le dispositif de communication sans fil (10 ; 700 ; 1000) adaptant au moins l'un des sous-ensembles (S1, S2, S3) de ressources radio en fonction de :
- une ou plusieurs conditions de fonctionnement dans le réseau de communication sans fil, et/ou
- - une priorité d'une transmission D2D à effectuer vers le dispositif de communication sans fil (10 ; 700 ; 1000), et/
- - du succès ou échec d'une ou de plusieurs transmissions D2D antérieures par le dispositif de
communication sans fil (10 ; 700 ; 1000).

8. Procédé selon l'une quelconque des revendications précédentes,
dans lequel les types de mécanismes de sélection comprennent un type de mécanisme de sélection en fonction de la sélection aléatoire des ressources radio, et/ou un type de mécanisme de sélection en fonction de la détection du pool de ressources pour estimer un état d'occupation futur des ressources radio dans le pool de ressources, et/ou un type de mécanisme de sélection en fonction de la détection partielle du pool de ressources pour estimer un état d'occupation futur des ressources radio dans le pool de ressources, et/ou un type de mécanisme de sélection en fonction de la sélection des ressources radio commandée par réseau.

9. Procédé de commande de communication D2D dans un réseau de communication sans fil, le procédé comprenant :
un nœud (100 ; 900 ; 1100) du réseau de communication sans fil configurant un pool de ressources pour la sélection de ressources radio pour des transmissions D2D par des dispositifs de communication sans fil (10 ; 700 ; 1000), le pool de ressources étant divisé en de multiples sous-ensembles (S1, S2, S3) de ressources radio qui sont chacun associés à au moins l'un des multiples types de mécanismes de sélection ; et
le nœud (100 ; 900 ; 1100) configurant au moins l'un des dispositifs de communication sans fil (10 ; 700 ; 1000), en fonction duquel de multiples types de mécanismes de sélection sont appliqués par le dispositif de communication sans fil respectif (10 ; 700 ; 1000) pour la sélection des ressources radio pour des transmissions D2D, effectuer la priorisation des sous-ensembles (S1, S2, S3) de ressources radio et sélectionner au moins une ressource radio parmi le pool de ressources en fonction de la priorisation des sous-ensembles (S1, S2, S3).

10. Procédé selon la revendication 9, comprenant :
le nœud (100 ; 900 ; 1100) envoyant de signaux de commande (502 ; 512, 513, 514) indiquant une priorité d'au moins l'un des sous-ensembles (S1, S2, S3) pour au moins l'un des dispositifs de communication sans fil (10 ; 700 ; 1000) ; et/ou
le nœud (100 ; 900 ; 1100) envoyant de signaux de commande (502 ; 512, 513, 514) indiquant l'association des sous-ensembles (S1, S2, S3) de ressources radio aux types de mécanismes de sélection ; et/ou
le nœud (100 ; 900 ; 1100) envoyant de signaux de commande (502 ; 512, 513, 514) indiquant au moins l'un des sous-ensembles (S1, S2, S3) à l'au moins un des dispositifs de communication sans fil (10 ; 700 ; 1000).

11. Procédé selon la revendication 9 ou 10, comprenant :
le nœud (100 ; 900 ; 1100) configurant l'au moins un des dispositifs de communication sans fil (10 ; 700 ; 1000), en fonction duquel de multiples types de mécanismes de sélection sont appliqués par le dispositif de communication sans fil respectif (10 ; 700 ; 1000) pour la sélection des ressources radio pour des transmissions D2D, la restriction d'une réservation d'au moins une ressource radio indiquée par une transmission D2D sur l'au moins une ressource radio sélectionnée,
dans lequel la restriction exige que l'au moins une ressource radio réservée fasse partie du même ou des mêmes sous-ensembles (S1, S2, S3) utilisés pour la sélection des ressources radio pour la transmission D2D indiquant la réservation.

12. Procédé selon l'une quelconque des revendications 9 à 11,
dans lequel, en fonction du sous-ensemble (S1, S2, S3) utilisé pour la sélection, le type de mécanisme de sélection appliqué par le dispositif de communication sans fil (10 ; 700 ; 1000) est soumis à des restrictions différentes, et/ou
dans lequel une taille minimale du sous-ensemble (S1, S2, S3) dépend de l'au moins un type de mécanisme de sélection associé au sous-ensemble (S1, S2, S3).

13. Procédé selon l'une quelconque des revendications 9 à 12, comprenant :
le nœud (100 ; 900 ; 1100) adaptant au moins l'un des sous-ensembles (S1, S2, S3) de ressources radio et indiquant le sous-ensemble adapté (S1, S2, S3) à l'au moins un dispositif de communication sans fil (10 ; 700 ; 1000),
dans lequel le nœud (100 ; 900 ; 1100) adapte l'au moins un des sous-ensembles (S1, S2, S3) en fonction de :
- un nombre de dispositifs de communication sans fil (10 ; 700 ; 1000) utilisant le pool de ressources, et/ou
- - un nombre de dispositifs de communication sans fil (10 ; 700 ; 1000) utilisant le pool de ressources en fonction de l'au moins un type de mécanisme de sélection associé à l'au moins un sous-ensemble (S1, S2, S3), et/ou
- - un niveau de congestion du pool de ressources, et/ou
- des niveaux de congestion des sous-ensembles (S1, S2, S3).

14. Procédé selon l'une quelconque des revendications 9 à 13,
dans lequel les types de mécanismes de sélection comprennent un type de mécanisme de sélection en fonction de la sélection aléatoire des ressources radio, et/ou un type de mécanisme de sélection en fonction de la détection du pool de ressources pour estimer un état d'occupation futur des ressources radio dans le pool de ressources, et/ou un type de mécanisme de sélection en fonction de la détection partielle du pool de ressources pour estimer un état d'occupation futur des ressources radio dans le pool de ressources, et/ou un type de mécanisme de sélection en fonction de la sélection des ressources radio commandée par réseau.

15. Dispositif de communication sans fil (10 ; 700 ; 1000), le dispositif de communication sans fil (10 ; 700 ; 1000) étant adapté pour :
configurer un pool de ressources pour la sélection des ressources radio pour des transmissions D2D par le dispositif de communication sans fil (10 ; 700 ; 1000), le pool de ressources étant divisé en de multiples sous-ensembles (S1, S2, S3) de ressources radio qui sont chacun associés à au moins l'un des multiples types de mécanismes de sélection ;
en fonction duquel de multiples types de mécanismes de sélection sont appliqués par le dispositif de communication sans fil (10) ; 700 ; 1000) pour la sélection des ressources radio pour des transmissions D2D, effectuer la priorisation des sous-ensembles (S1, S2, S3) de ressources radio ;
en fonction de la priorisation des sous-ensembles (S1, S2, S3) et à l'aide du type de mécanisme de sélection appliqué, sélectionner au moins une ressource radio parmi le pool de ressources ; et
effectuer une ou plusieurs transmissions D2D sur l'au moins une ressource radio sélectionnée.

16. Nœud (100 ; 900 ; 1100) pour un réseau de communication sans fil, le nœud (100 ; 900 ; 1100) étant adapté pour :
configurer un pool de ressources pour une sélection de ressources radio pour des transmissions D2D par des dispositifs de communication sans fil (10 ; 700 ; 1000), le pool de ressources étant divisé en de multiples sous-ensembles (S1, S2, S3) de ressources radio qui sont chacun associés à au moins l'un des multiples types de mécanismes de sélection ; et
configurer au moins l'un des dispositifs de communication sans fil (10 ; 700 ; 1000), en fonction duquel de multiples types de mécanismes de sélection sont appliqués par le dispositif de communication sans fil respectif (10 ; 700 ; 1000) pour la sélection des ressources radio pour des transmissions D2D, effectuer la priorisation des sous-ensembles (S1, S2, S3) de ressources radio et sélectionner au moins une ressource radio parmi le pool de ressources en fonction de la priorisation des sous-ensembles (S1, S2, S3).

17. Programme informatique ou produit de programme informatique comprenant :
- un code de programme à exécuter par au moins un processeur (1050) d'un dispositif de communication sans fil (10 ; 700 ; 1000), moyennant quoi l'exécution du code de programme amène le dispositif de communication sans fil (10 ; 700 ; 1000) à mettre en œuvre un procédé selon l'une quelconque des revendications 1 à 8 ; et/ou
- un code de programme à exécuter par au moins un processeur (1150) d'un nœud (100 ; 900 ; 1100) pour un réseau de communication sans fil, moyennant quoi l'exécution du code de programme amène le nœud (100 ; 900 ; 1100) à mettre en œuvre un procédé selon l'une quelconque des revendications 9 à 14.
